(19) Europäisches Patentamt
European Patent Office
Office européen des brevets

(11) **EP 4 647 975 A1**

(12) **EUROPEAN PATENT APPLICATION**

(43) Date of publication:
**12.11.2025 Bulletin 2025/46**

(21) Application number: **25174587.3**

(22) Date of filing: **06.05.2025**

(51) International Patent Classification (IPC):
**G06N 10/20** (2022.01)     **G06N 10/70** (2022.01)

(52) Cooperative Patent Classification (CPC):
**G06N 10/70; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.05.2024 JP 2024077452**

(71) Applicant: **FUJITSU LIMITED**
**Kawasaki-shi, Kanagawa 211-8588 (JP)**

(72) Inventor: **AKAHOSHI, Yutaro**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM COMPUTATION SUPPORT METHOD, AND INFORMATION PROCESSING APPARATUS**

(57) An information processing apparatus determines an order of priority for each of a plurality of qubit pairs, which are used in a gate operation of a two-qubit rotation gate in an ancilla state generation circuit. The information processing apparatus generates a plurality of arrangement candidates each indicating a candidate of positions of a plurality of qubit groups in a qubit device, the qubit groups being used in parallel execution of the ancilla state generation circuit. The information processing apparatus selects one arrangement candidate, based on the orders determined for first qubit pairs to be used in the gate operation of the two-qubit rotation gate in the qubit groups at the position indicated by each arrangement candidate. The information processing apparatus determines to cause the ancilla state generation circuit to execute in parallel using a first plurality of qubit groups at the positions indicated by the selected arrangement candidate.

FIG. 1

EP 4 647 975 A1

**Description**

FIELD

The embodiments discussed herein relate to a computer program, a quantum computation support method, and an information processing apparatus.

BACKGROUND

In a quantum computer, quantum computations are executed according to a quantum circuit by performing gate operations on qubits. An individual qubit is the minimum unit of information used in computation and corresponds to a bit (a classical bit) in a classical computer. Unlike classical bits, each qubit is also able to take a superposition state of "0" and "1".

Qubit information may be destroyed (errors may occur) due to interactions with the environment, errors in gate operations, or others. Countermeasures against such errors include quantum error correction and quantum error mitigation.

The quantum error correction is a process of detecting the occurrence of an error and correcting the error by (redundantly) encoding quantum information using a plurality of qubits. Hereinafter, qubits that are not encoded are referred to as physical qubits, and a set of encoded qubits is referred to as a logical qubit. The quantum error mitigation is a process of advancing the computation with errors and mitigating the impacts of the errors by, for example, modifying the quantum circuit, extrapolating a measurement result, or others.

Quantum computers that perform quantum computation while performing the quantum error correction on logical qubits are called fault-tolerant quantum computers (FTQCs). FTQCs are able to perform arbitrary quantum computations by combining predetermined basic gates. The predetermined basic gates include the H gate, the CNOT gate, the S gate, and the T gate. The H gate, the CNOT gate, and the S gate are quantum gates for Clifford operations, and the T gate is a quantum gate for non-Clifford operations. A set of these basic gates is called Clifford+T.

Among these Clifford+T gates, the T gate uses a huge number of physical qubits for error correction. Therefore, an FTQC for performing useful computation needs a scale of about one million physical qubits.

As a technique for reducing the number of physical qubits used for error correction, for example, a high-efficiency phase rotation gate quantum computing architecture called a space-time efficient analog rotation quantum computing (STAR) architecture has been proposed.

See, for example, Yutaro Akahoshi, Kazunori Maruyama, Hirotaka Oshima, Shintaro Sato, and Keisuke Fujii, "Partially Fault-tolerant Quantum Computing Architecture with Error-corrected Clifford Gates and Space-time Efficient Analog Rotations", arXiv:2303.13181v1, 23 Mar 2023.

The STAR architecture adopts phase rotation gates as basic gates instead of T gates, which have a high error correction cost. Without the T gates, it is possible to reduce the number of physical qubits used for quantum computation and to speed up gate operations. However, error correction in the phase rotation gates is incomplete. Therefore, in order to obtain a correct computation result, it is crucial to minimize the occurrence of errors in the phase rotation gates as much as possible.

SUMMARY

It is an object of the present disclosure to reduce the occurrence of errors in a phase rotation gate.

In one aspect, there is provided a computer program that causes a computer to perform a process including: determining, based on accuracy information indicating error rates of a two-qubit gate operation executed on each qubit pair of a plurality of qubit pairs, each including interconnected qubits among a plurality of qubits in a qubit device included in a quantum computer, an order of priority for each qubit pair that is used in a gate operation of a two-qubit rotation gate in an ancilla state generation circuit, the ancilla state generation circuit being used for implementing a phase rotation gate; generating a plurality of arrangement candidates each indicating a candidate of positions of a plurality of qubit groups in the qubit device, the plurality of qubit groups being used in parallel execution of the ancilla state generation circuit; selecting an arrangement candidate from the plurality of arrangement candidates, based on orders of priority determined for first qubit pairs that are to be used in the gate operation of the two-qubit rotation gate in execution of the ancilla state generation circuit in the plurality of qubit groups at positions indicated by each of the plurality of arrangement candidates; and determining to cause the quantum computer to execute the ancilla state generation circuit in parallel using a first plurality of qubit groups at positions indicated by the selected arrangement candidate, in causing the quantum computer to execute a gate operation of the phase rotation gate, wherein the phase rotation gate includes a gate teleportation circuit, and an ancilla state generated by the ancilla state generation circuit is input to the gate teleportation circuit.

EP 4 647 975 A1

BRIEF DESCRIPTION OF DRAWINGS

FIG. 1 illustrates an example of a quantum computation support method according to a first embodiment;
FIG. 2 illustrates an example of a system configuration according to a second embodiment;
FIG. 3 illustrates an example of hardware of a quantum computing system;
FIG. 4 illustrates the characteristics of a qubit;
FIG. 5 illustrates an example of quantum error correction;
FIG. 6 illustrates an example of basic gates used in fault-tolerant quantum computation;
FIG. 7 illustrates an example of a quantum circuit that performs a gate operation for an arbitrary rotation;
FIG. 8 illustrates an example of a quantum circuit for preparing an ancilla state;
FIG. 9 illustrates an example of expansion to a surface code;
FIG. 10 illustrates an example of an error that is difficult to remove;
FIG. 11 illustrates an example of mapping physical qubits to logical qubits;
FIG. 12 is a block diagram illustrating an example of functions of a classical computer for quantum computation;
FIG. 13 is a flowchart illustrating an example procedure for a quantum computation process;
FIG. 14 illustrates an example of a flow of information in an optimal arrangement determination process;
FIG. 15 is a flowchart illustrating an example procedure for the optimal arrangement determination process;
FIG. 16 illustrates examples of accuracy for qubit pairs;
FIG. 17 illustrates an example of determined orders of priority;
FIG. 18 is a flowchart illustrating an example procedure for an arrangement candidate determination process;
FIG. 19 illustrates an example of an arrangement candidate for an ancilla state generation circuit;
FIG. 20 illustrates an example of a plurality of generated arrangement candidates;
FIG. 21 is a flowchart illustrating an example procedure for an arrangement optimization process;
FIG. 22 illustrates an example of an arrangement candidate evaluation method;
FIG. 23 illustrates an example of a method of calculating an evaluation index value;
FIG. 24 is a flowchart illustrating an example procedure for a circuit execution schedule and initialization method determination process;
FIG. 25 illustrates an example of a circuit execution schedule and an initialization method;
FIG. 26 illustrates an example of an initialization method according to the position of an encoding region;
FIG. 27 is a flowchart illustrating an example procedure for a quantum circuit execution process;
FIG. 28 is a flowchart illustrating an example procedure for a phase rotation gate operation process;
FIG. 29 illustrates an example of two surface codes with different error rates for qubit pairs; and
FIG. 30 illustrates examples of calculated logical error rates.

DESCRIPTION OF EMBODIMENTS

Hereinafter, embodiments will be described with reference to the drawings. A plurality of embodiments may be combined unless they exclude each other.

[First Embodiment]

The first embodiment provides a quantum computation support method capable of reducing the occurrence of errors in a phase rotation gate.

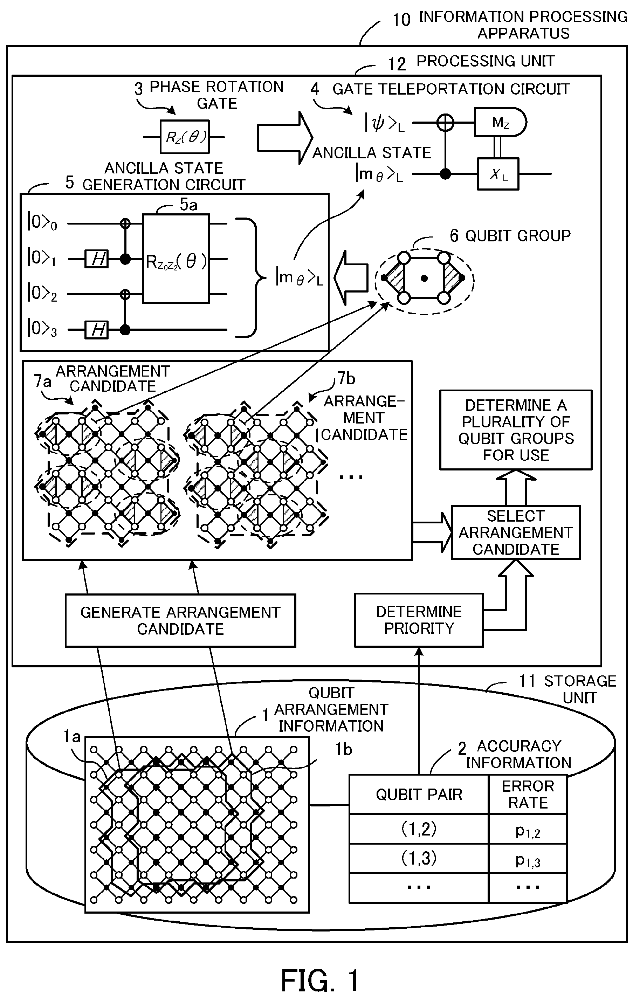

FIG. 1 illustrates an example of the quantum computation support method according to the first embodiment. FIG. 1 illustrates an information processing apparatus 10 that implements the quantum computation support method. For example, the information processing apparatus 10 implements the quantum computation support method by executing a quantum computation support program.
The information processing apparatus 10 includes, for example, a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.
The storage unit 11 stores qubit arrangement information 1 and accuracy information 2. The qubit arrangement information 1 indicates the arrangement and connectivity of a plurality of qubits in a qubit device included in a quantum computer. The accuracy information 2 indicates error rates of a two-qubit gate operation between each pair of two interconnected qubits.
As will be described in more detail later, a phase rotation gate 3 is implemented using a gate teleportation circuit 4 using a predetermined ancilla state "$|m_\theta\rangle_L$". The gate teleportation circuit 4 needs the input of an ancilla state. The ancilla state is generated by an ancilla state generation circuit 5, which represents a procedure of generating an ancilla state.

The ancilla state generation circuit 5 is executed using a qubit group 6 that includes qubits (data qubits) indicating encoded ancilla states and qubits (ancilla qubits) used for error detection.

The processing unit 12 determines an order of priority for each of a plurality of qubit pairs that are used in the gate operation of a two-qubit rotation gate 5a in the ancilla state generation circuit 5. For example, the processing unit 12 determines the order of priority for each of the plurality of qubit pairs on the basis of the accuracy information 2 such that qubit pairs having lower error rates are given higher orders of priority.

In addition, the processing unit 12 generates, based on the qubit arrangement information 1, a plurality of arrangement candidates 7a, 7b, and ⋯ each indicating a candidate for the positions of a plurality of qubit groups in the qubit device, the plurality of qubit groups being used for parallel executions of the ancilla state generation circuit 5.

The processing unit 12 selects one arrangement candidate from the plurality of arrangement candidates 7a, 7b, and ⋯. For example, the processing unit 12 obtains the orders of priority of first qubit pairs that are to be used in the gate operation of the two-qubit rotation gate 5a during the execution of the ancilla state generation circuit 5 in the plurality of qubit groups at the positions indicated by each of the plurality of arrangement candidates 7a, 7b, and ⋯. Then, the processing unit 12 selects an arrangement candidate on the basis of the orders of priority of the first qubit pairs of each of the plurality of qubit groups.

Then, the processing unit 12 determines to cause the quantum computer to execute the ancilla state generation circuit 5 in parallel using the first plurality of qubit groups at the positions indicated by the selected arrangement candidate, at the time of causing the quantum computer to execute the gate operation of the phase rotation gate 3.

Thereafter, when the time to execute the phase rotation gate 3 has come in the execution of the quantum circuit by the quantum computer, the processing unit 12 instructs the quantum computer to execute the ancilla state generation circuit 5 using each of the first plurality of qubit groups.

In this manner, the positions of the qubit groups 6 used for generating the ancilla state for executing the phase rotation gate 3 are determined on the basis of the error rates of the qubit pairs of the qubit groups included in the arrangement candidates. By doing so, it is possible to reduce the occurrence of errors in the phase rotation gate 3. For example, the processing unit 12 selects an arrangement candidate in which the orders of priority of the first qubit pairs in the plurality of qubit groups are as high as possible, so as to reduce the error rate in the gate operation of the two-qubit rotation gate 5a in the ancilla state generation circuit 5. This results in a reduction in the occurrence of errors in the phase rotation gate 3.

In this connection, the processing unit 12 extracts one qubit group or a plurality of qubit groups from each region 1a and 1b with a predetermined code distance, and generates one or more arrangement candidates. In the example of FIG. 1, the code distance is "5". In this case, a plurality of arrangement candidates are generated from the region 1a, and a plurality of arrangement candidates are also generated from the region 1b. In addition to the illustrated regions 1a and 1b, other regions with the predetermined code distance, from which arrangement candidates are generated, may be set.

As described above, the processing unit 12 generates the arrangement candidates from the regions 1a and 1b with the predetermined code distance. That is, it is possible to generate arrangement candidates from a set of qubits within the region of a code (for example, a surface code) indicating the state of a logical qubit on which the phase rotation gate 3 acts. This makes it easy to expand the code indicating the ancilla state generated from the qubit group 6, in order to input the ancilla state to the gate teleportation circuit 4.

The processing unit 12 may calculate an evaluation index value for each of the plurality of arrangement candidates 7a, 7b, and ⋯ using a predetermined calculation formula and select an arrangement candidate on the basis of the evaluation index values. For example, the processing unit 12 calculates an evaluation index value indicating the likelihood of failure in the generation of an ancilla state, for each of the plurality of arrangement candidates 7a, 7b, and ⋯ on the basis of the accuracy information 2. Then, the processing unit 12 selects an arrangement candidate on the basis of the evaluation index values of the plurality of arrangement candidates 7a, 7b, and ⋯. For example, the processing unit 12 selects an arrangement candidate having the lowest likelihood of failure in the generation of an ancilla state. This increases the likelihood of success in the generation of an ancilla state and reduces the error rate of the phase rotation gate 3.

The processing unit 12 may calculate the evaluation index value using the error rate (minimum error rate) of the qubit pair having the lowest error rate in each of the plurality of qubit groups. For example, with respect to a calculation-target arrangement candidate, the processing unit 12 detects the minimum error rate among the error rates of the qubit pairs in each qubit group 6 of the plurality of qubit groups included in the arrangement candidate. Then, the processing unit 12 calculates an evaluation index value in such a manner that the evaluation index value indicates a lower likelihood of failure in the generation of an ancilla state as the minimum error rates respectively obtained for the plurality of qubit groups are lower.

As a result, the gate operation of the two-qubit rotation gate 5a in the ancilla state generation circuit 5 is executed using a qubit pair having a low error rate. This reduces the occurrence of errors in the phase rotation gate 3.

Note that the processing unit 12 is able to use a weighted sum using minimum error rates to calculate the evaluation index value. For example, the processing unit 12 calculates the evaluation index value for a calculation-target arrangement candidate using a formula that includes a weighted sum. The weighted sum here involves multiplying each of the minimum error rates of the plurality of qubit groups, sorted in ascending order, by a weight that is greater than the weight used for the subsequent minimum error rate in the ascending order. Accordingly, it is possible to obtain an accurate evaluation index value on the assumption that, when the ancilla states generated from a plurality of qubit groups pass the error detection, an ancilla state generated from a plurality of qubit groups having lower minimum error rates is used.

The processing unit 12 may determine a qubit pair on which the two-qubit rotation gate 5a included in the ancilla state generation circuit 5 acts, on the basis of the error rates of the qubit pairs in each of a plurality of qubit groups used in the execution of the ancilla state generation circuit 5. For example, the processing unit 12 determines that a qubit pair having the lowest error rate among the qubit pairs in the qubit group 6 is a qubit pair on which the two-qubit rotation gate 5a acts.

As a result, the quantum computer is able to execute the gate operation of the two-qubit rotation gate 5a, in which an error is likely to occur, in the ancilla state generation circuit 5 using a qubit pair having a low error rate. This results in a reduction in the error rate of the phase rotation gate 3.

[Second Embodiment]

The second embodiment provides a quantum computing system capable of reducing the occurrence of errors in a phase rotation gate during quantum computation by a STAR architecture.

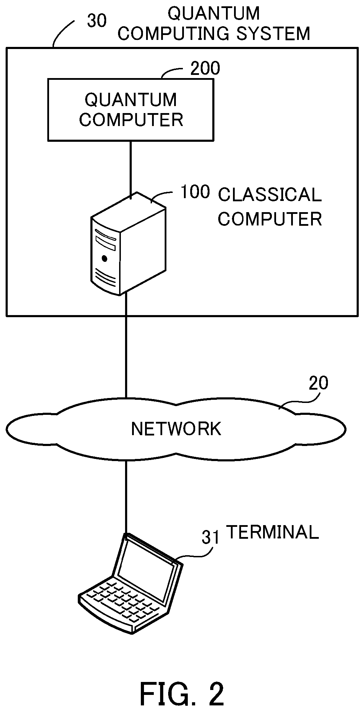

FIG. 2 illustrates an example of a system configuration according to the second embodiment. The quantum computing system 30 includes a classical computer 100 and a quantum computer 200. The classical computer 100 is a so-called von Neumann computer. The quantum computer 200 is a non-Neumann computer to which the principle of quantum mechanics is applied. The classical computer 100 is connected to a terminal 31 via a network 20. The terminal 31 is a von Neumann computer used by a user.

The user uses the terminal 31 to create a quantum circuit for solving a problem through quantum computation. The created quantum circuit is transmitted from the terminal 31 to the quantum computing system 30. In the quantum computing system 30, the classical computer 100 and the quantum computer 200 cooperate with each other to execute quantum computation according to the received quantum circuit. Then, the quantum computing system 30 transmits the computation result to the terminal 31.

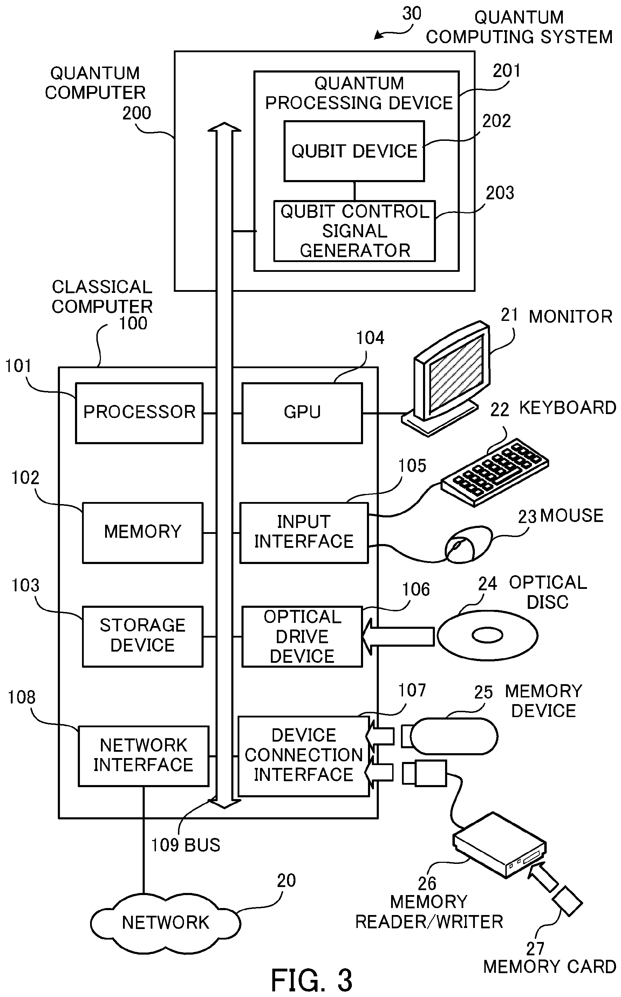

FIG. 3 illustrates an example of hardware of the quantum computing system. The classical computer 100 is entirely controlled by a processor 101. A memory 102 and a plurality of peripheral devices are connected to the processor 101 via a bus 109.

The classical computer 100 may be a multiprocessor system having a plurality of processors. A set of multiple processors in a multiprocessor system may be referred to as a processor 101. The processor 101 may be referred to as processor circuitry. Each of the plurality of processors is able to execute some or all of a plurality of processes executed by the classical computer 100. Two or more processes among a plurality of related processes may be executed by different processors.

The processor 101 is, for example, a central processing unit (CPU), a micro processing unit (MPU), or a digital signal processor (DSP). At least a part of the functions implemented by the processor 101 executing programs may be implemented by an electronic circuit such as an application specific integrated circuit (ASIC) or a programmable logic device (PLD).

The memory 102 is used as a main memory device of the classical computer 100. The memory 102 temporarily stores at least part of an operating system (OS) program and application programs to be executed by the processor 101. The memory 102 also stores various data used for processing by the processor 101. As the memory 102, for example, a volatile semiconductor memory device such as a random access memory (RAM) is used.

The peripheral devices connected to the bus 109 include a storage device 103, a graphics processing unit (GPU) 104, an input interface 105, an optical drive device 106, a device connection interface 107, and a network interface 108.

The storage device 103 electrically or magnetically writes and reads data to and from a built-in recording medium. The storage device 103 is used as an auxiliary storage device of the classical computer 100. The storage device 103 stores the OS program, application programs, and various data. As the storage device 103, for example, a hard disk drive (HDD) or a solid state drive (SSD) may be used.

The GPU 104 is an arithmetic unit that performs image processing. The GPU 104 is an example of a graphic controller. A monitor 21 is connected to the GPU 104. The GPU 104 displays images on the screen of the monitor 21 in accordance with instructions from the processor 101. Examples of the monitor 21 include an organic electro luminescence (EL) display device, a liquid crystal display device, and others.

A keyboard 22 and a mouse 23 are connected to the input interface 105. The input interface 105 transmits signals received from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on the optical disc 24 or writes data to the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read only memory (CD-ROM), a compact disc recordable (CD-R), compact disc rewritable (CD-RW), or the like.

The device connection interface 107 is a communication interface for connecting peripheral devices to the classical computer 100. For example, a memory device 25 and a memory reader-writer 26 may be connected to the device connection interface 107. The memory device 25 is a recording medium having a function of communicating with the device connection interface 107. The memory reader-writer 26 is a device that writes data to a memory card 27 or reads data from the memory card 27. The memory card 27 is a card-type recording medium.

The network interface 108 is connected to the network 20. The network interface 108 transmits and receives data to and from other computers or communication devices via the network 20. The network interface 108 is a wired communication interface connected to a wired communication device such as a switch or a router via a cable. Further, the network interface 108 may be a wireless communication interface communicatively connected to a wireless communication device such as a base station or an access point by radio waves.

The quantum computer 200 shares the bus 109 with the classical computer 100. The quantum computer 200 is able to perform information communication with each element in the classical computer 100 via the bus 109.

The quantum computer 200 includes a quantum processing device 201 connected to the bus 109. The quantum processing device 201 performs gate operations on qubits according to the quantum gates represented in a quantum circuit and measures the states of the qubits. The quantum processing device 201 includes a qubit device 202 and a qubit control signal generator 203. The qubit device 202 holds the states of a plurality of qubits and performs gate operations on the qubits. The qubit control signal generator 203 generates control signals for instructing gate operations or measurements on the qubits.

The quantum computing system 30 implements the processing functions of the second embodiment by the hardware described above. The information processing apparatus 10 described in the first embodiment may also be implemented by the same hardware as the quantum computing system 30 illustrated in FIG. 3.

The classical computer 100 implements the processing functions of the second embodiment by executing programs recorded on a computer-readable recording medium, for example. The programs describing the processing contents to be executed by the classical computer 100 may be recorded on various recording media. For example, a program to be executed by the classical computer 100 may be stored in the storage device 103. The processor 101 loads at least part of the program from the storage device 103 into the memory 102 and executes the program. The program to be executed by the classical computer 100 may be recorded on a portable recording medium such as the optical disc 24, the memory device 25, or the memory card 27. The program stored in the portable recording medium becomes executable after being installed in the storage device 103 under the control of the processor 101, for example. Alternatively, the processor 101 may read the program directly from the portable recording medium and execute the program.

Next, an outline of error correction in quantum computation and usefulness of the STAR architecture will be described.

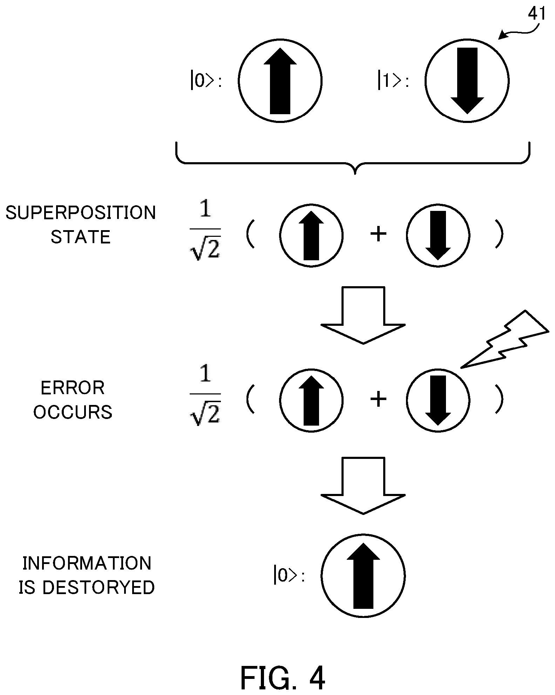

FIG. 4 illustrates the characteristics of a qubit. A qubit 41, which is the minimum unit of information in the quantum computer 200, exists in a state of $|0\rangle$ or $|1\rangle$ or in a superposition state of both. In the superposition state, the probabilities of measuring the qubit 41 in the states of $|0\rangle$ and $|1\rangle$ are obtained. For example, in the case where the states of $|0\rangle$ and $|1\rangle$ have equal probabilities, the superposition state of the qubit 41 is expressed as "$2^{-1/2} (|0\rangle + |1\rangle)$".

Such information of the qubit 41 is destroyed (an error occurs) due to interactions with the environment, operational errors, and others. For example, if the superposition state is destroyed by an error, the state of the qubit 41 may collapse to a state such as $|0\rangle$. In order to improve the computational accuracy, it is demanded to detect qubits with errors and correct the states of the qubits to correct states.

To meet the demand, a technique called quantum error correction has been proposed. In the quantum error correction, a qubit is encoded using a plurality of physical qubits. When encoding is performed, the states of one or more logical qubits are represented by a plurality of physical qubits used for the encoding. Qubits in which errors have occurred are detected and corrected based on the collective state of the plurality of encoded qubits.

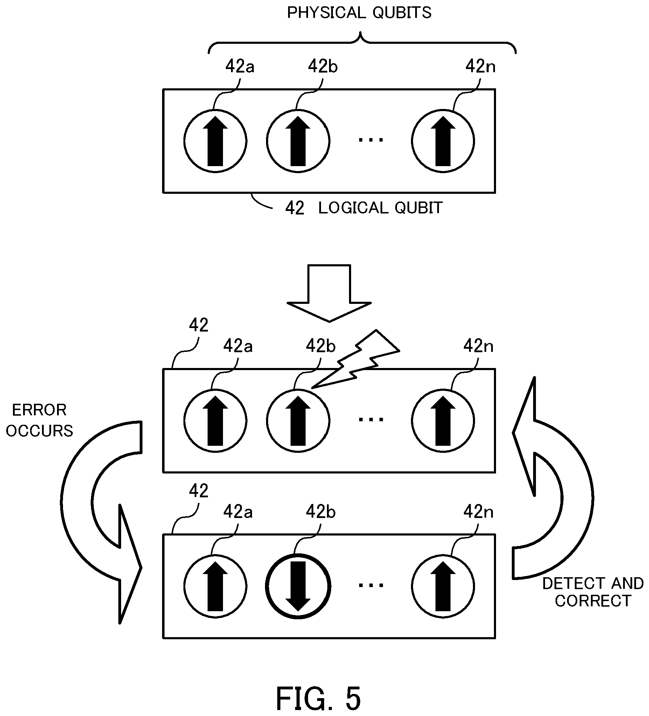

FIG. 5 illustrates an example of the quantum error correction. As illustrated in FIG. 5, a logical qubit 42 is defined by a plurality of physical qubits 42a, 42b, $\cdots$, and 42n. The example of FIG. 5 assumes that, when all the plurality of physical qubits 42a, 42b, ..., and 42n are in the state of $|0\rangle$, an error occurs and the physical qubit 42b is flipped to the state of $|1\rangle$. In this case, the error is detected based on information obtained from the states of the plurality of physical qubits 42a, 42b, ..., and 42n. Then, the physical qubit 42b in which the error has occurred is identified, and the state of the physical qubit 42b is corrected.

By appropriately performing the quantum error correction in this way, even if errors occur in physical qubits, the logical qubit 42 is able to maintain the correct state, as long as the number of errors is within a tolerance limit. Quantum computation involving quantum error correction for logical qubits is achieved by combining predetermined basic gates.

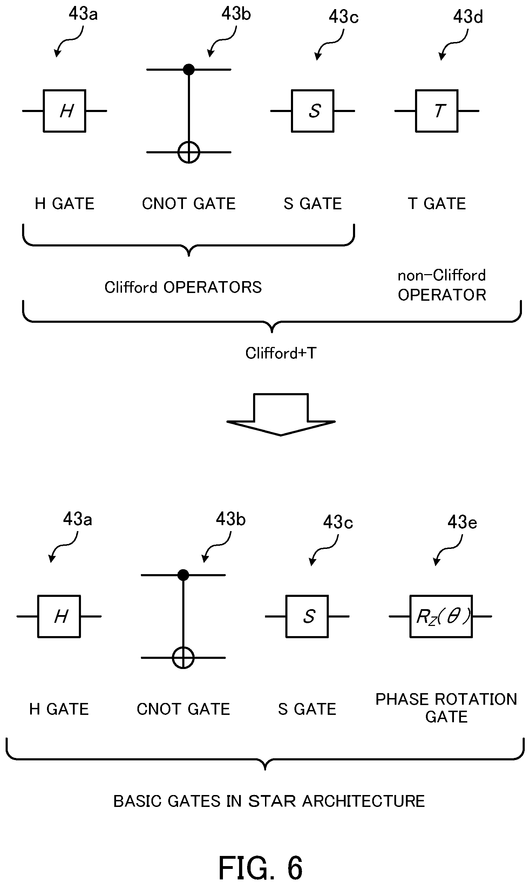

FIG. 6 illustrates an example of basic gates used in fault-tolerant quantum computation. Basic gates used in quantum computation involving quantum error correction are the H gate 43a, the CNOT gate 43b, the S gate 43c, and the T gate 43d. The H gate 43a is referred to as a Hadamard gate and is a quantum gate that rotates the state by 180 degrees around an axis that is 45 degrees between the Z axis and the X axis. The CNOT gate 43b is a quantum gate that keeps the state of the target qubit unchanged if the control qubit is in the state of 10), and flips the state of the target qubit (to 11) if |0⟩, and to |0⟩ if 11)) if the control qubit is in the state of 11). The S gate 43c is a quantum gate that rotates the state by $\pi/2$ around the Z axis. The T gate 43d is a quantum gate that rotates the state by $\pi/4$ around the Z axis.

Among these gates, the H gate 43a, the CNOT gate 43b, and the S gate 43c are called Clifford operators. On the other hand, the T gate 43d is called a non-Clifford operator. These basic gates are collectively referred to as Clifford+T gates. The Clifford+T gates in the computation by the quantum computer 200 corresponds to AND, XOR, and NOT in the classical computer 100. That is, it is possible to execute arbitrary quantum computations by combining the Clifford+T quantum gates.

In fault-tolerant quantum computation using the Clifford+T gates, one million or more physical qubits are used to execute useful computations. A large proportion (e.g., 90% or more) of the huge number of physical qubits are used for arbitrary-angle rotations of logical qubits. Arbitrary-angle rotations involve gate operations using a large number of T gates 43d. In addition, a large number of physical qubits are used for error correction of the T gates 43d (which results in a high error correction cost). This is a major factor that increases the number of physical qubits for realizing FTQC.

Moreover, in most cases, an arbitrary-angle rotation is performed by repeating the gate operation of the T gate 43d about several tens of times. Therefore, the use of T gates 43d for arbitrary-angle rotations reduces the execution efficiency of the quantum circuit.

To address this, the STAR architecture uses a phase rotation gate 43e as a basic gate instead of the T gate 43d of the Clifford+T gates. The phase rotation gate 43e in the STAR architecture is implemented with a gate teleportation circuit using a predetermined ancilla state "$|m_\theta\rangle_L$". The state "$|m_\theta\rangle$" is defined as "$|m_\theta\rangle = R_z(\theta)|+\rangle = 2^{-1/2}(e^{-i\theta/2}|0\rangle + e^{+i\theta/2}|1\rangle)$", where $\theta$ is an arbitrary rotation angle. The subscript L in the ancilla state "$|m_\theta\rangle_L$" indicates that the state is represented by a redundant logical qubit. Hereinafter, similarly, the subscript L is added to the states of logical qubits.

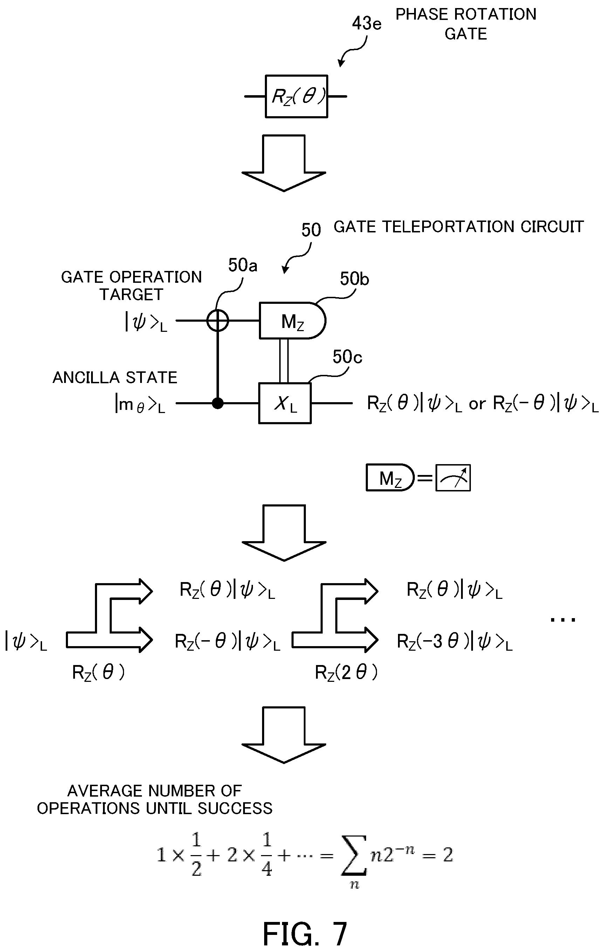

FIG. 7 illustrates an example of a quantum circuit that performs a gate operation for an arbitrary rotation. A gate teleportation circuit 50 is a quantum circuit that performs a rotation by an angle $\theta$ ($R_z(\theta)$). The gate teleportation circuit 50 has two inputs: an operation target state "$|\psi\rangle_L$" as a first qubit and an ancilla state "$|m_\theta\rangle_L$" a second qubit.

In the gate teleportation circuit 50, the gate operation of a CNOT gate 50a is first performed with the second qubit as a control qubit and the first qubit as a target qubit. Then, a measurement 50b of the first qubit is performed. If the measurement result is "+1", the gate operation of an X gate 50c is performed on the second qubit.

When the measurement result of the first qubit is "+1", the state of the second qubit is "$R_z(\theta)|\psi\rangle_L$". When the measurement result of the first qubit is "-1", the state of the second qubit is "$Rz(-8)|\psi\rangle_L$". Thus, after the gate operation for an arbitrary rotation by the gate teleportation circuit 50, the obtained result is either "$R_z(\theta)|\psi\rangle_L$" or "$R_z(-\theta)|\psi\rangle_L$". That is, the output state stochastically represents an inverse rotation. The probability that the output state represents "$R_z(\theta)|\psi\rangle_L$" and the probability that the output state represents "$R_z(-\theta)|\psi\rangle_L$" are each "1/2".

Since the output state of the gate teleportation circuit 50 stochastically represents a target rotation (forward rotation) or an inverse rotation, the quantum computing system 30 repeatedly executes the same gate operation until the output state represents the target rotation.

For example, if a gate operation for a rotation by the target angle $\theta$ fails and results in an inverse rotation ($-\theta$), the quantum computing system 30 executes a rotation by an angle $2\theta$ in the gate operation of the next rotation. If the gate operation of the rotation by the angle $2\theta$ also fails and results in an inverse rotation ($-2\theta$), it means that the total angle of the two rotations is $-3\theta$. In this case, the quantum computing system 30 executes, for example, a rotation by an angle $4\theta$ in the gate operation of the next rotation.

Assuming that the probability that a rotation succeeds and the probability that a rotation fails are each 1/2, the average number of rotation operations until success is "$1 \times (1/2) + 2 \times (1/4) + \cdots = \Sigma_n n2^{-n} = 2$". That is, the quantum computing system 30 is able to achieve an arbitrary rotation by executing the gate operation of the gate teleportation circuit 50 twice on average.

The ancilla state "$|m_\theta\rangle_L$" is used as an input to the gate teleportation circuit 50. Therefore, a generation process of the ancilla state "$|m_\theta\rangle_L$" is performed before the execution of the gate teleportation. The accuracy of the generated ancilla state "$|m_\theta\rangle_L$" affects the accuracy of the entire arbitrary rotation.

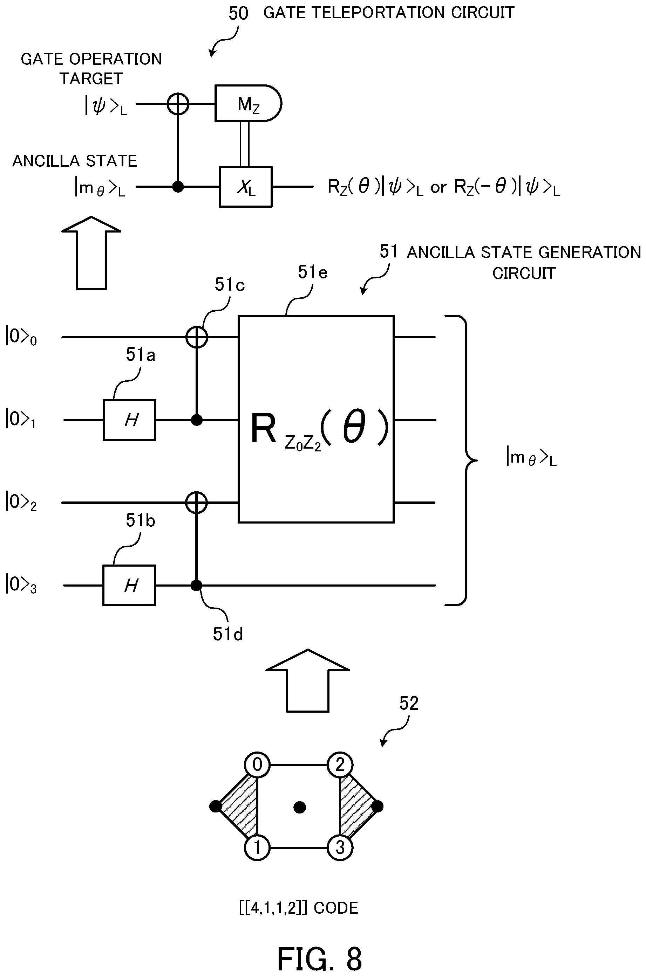

FIG. 8 illustrates an example of a quantum circuit for preparing an ancilla state. The ancilla state "$|m_\theta\rangle_L$" that is input to the gate teleportation circuit 50 is generated by applying an error correction code called a [[4,1,1,2]] code 52.

In general, each parameter in a [[n,k,r,d]] code has the following meaning.

n: the number of physical qubits used for encoding
k: the number of logical qubits in the code
r: the number of gauge qubits in the code
d: code distance of code

The gauge qubits provide a (redundant) degree of freedom, which is independent of the logical qubits and is not used for computation.

The [[4,1,1,2]] code 52 is a code having one logical qubit and one gauge qubit. The use of the [[4,1,1,2]] code 52 enables efficient error detection by utilizing the degree of freedom of the gauge qubit (see the aforementioned literature). By collectively representing the degrees of freedom of the logical qubit and the gauge qubit, the [[4,1,1,2]] code 52 may be written as a [[4,2,2]] code.

The states of the four physical qubits input to an ancilla state generation circuit 51 are all $|0\rangle$. In the ancilla state generation circuit 51, first, the gate operations of H gates 51a and 51b are performed on the second and fourth physical qubits among the four physical qubits. Next, the gate operation of a CNOT gate 51c is performed with the second physical qubit as the control qubit and the first physical qubit as the target qubit. At the same time, the gate operation of a CNOT gate 51d is performed with the fourth physical qubit as the control qubit and the third physical qubit as the target qubit. Then, a two-qubit rotation gate 51e around the Z-axis is applied to the first physical qubit and the third physical qubit.

The operation of the two-qubit rotation gate 51e is "$R_{Z0Z2}(\theta) = e^{-i(1/2)\theta Z0Z2}$" (the number following Z is a subscript of Z), and is expressed by a matrix as equation (1).

$$R_{ZZ}(\theta) = exp\left(-i\frac{\theta}{2}ZZ\right) = \begin{pmatrix} e^{-i\frac{\theta}{2}} & 0 & 0 & 0 \\ 0 & e^{i\frac{\theta}{2}} & 0 & 0 \\ 0 & 0 & e^{i\frac{\theta}{2}} & 0 \\ 0 & 0 & 0 & e^{-i\frac{\theta}{2}} \end{pmatrix} \quad (1)$$

The two-qubit rotation gate 51e expressed by equation (1) is easily executed in the quantum computer 200. For example, the two-qubit rotation gate 51e is implemented using an XX rotation gate $R_{XX}(\theta)$ and an H gate in an iontrap quantum computer. The two-qubit rotation gate 51e is also implemented using, for example, a cross-resonance gate $R_{ZX}(\theta)$ and an H gate in a superconducting quantum computer. Even when these computers are not available, the two-qubit rotation gate 51e may be implemented by combining a CNOT gate and an RZ gate ($R_Z(\theta)$). The output of the ancilla state generation circuit 51 is used as an encoded ancilla state "$|m_\theta\rangle_L$".

In the gate teleportation circuit 50 and the ancilla state generation circuit 51, the ancilla state "$|m_\theta\rangle_L$" encoded by the [[4,1,1,2]] code 52 is generated, and then the state in the encoded form undergoes a gate operation for an arbitrary rotation. As a result, the arbitrary rotation is realized without going through a decoded state, which prevents an increase in the error rate that would occur if the state were decoded.

The generated ancilla state "$|m_\theta\rangle_L$" is subjected to error detection by the [[4,1,1,2]] code 52. When an error is detected, the generated ancilla state "$|m_\theta\rangle_L$" is discarded, and an ancilla state "$|m_\theta\rangle_L$" is generated again. This makes it possible to generate an ancilla state with as few errors as possible. Hereinafter, the probability of detecting an error and retrying is referred to as a failure probability P.

The use of the [[4,1,1,2]] code 52 in this way enables the execution of the phase rotation gate 43e with few errors. The code distance of the ancilla state generated by the [[4,1,1,2]] code 52 is "2". On the other hand, an ancilla state used as an input to the gate teleportation circuit 50, which implements an arbitrary rotation, needs to be encoded with a code distance that is applied to the gate teleportation circuit 50. Therefore, the quantum computing system 30 expands the ancilla state generated by the [[4,1,1,2]] code 52 to a surface code with the target code distance.

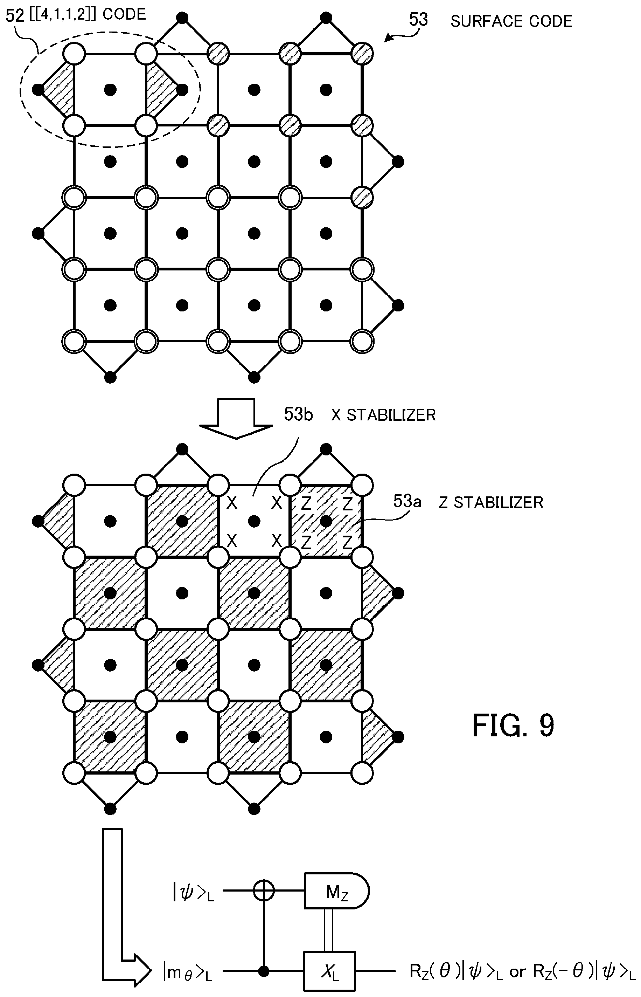

FIG. 9 illustrates an example of expansion to a surface code. A surface code 53 is an expansion of the [[4,1,1,2]] code 52 to code distance "5" (d = 5). The state prepared with the [[4,1,1,2]] code 52 is set at the top left of the surface code 53. The other physical qubits are each initialized to $|0\rangle$ or $|+\rangle$. In the surface code 53, the hatched circles represent physical qubits initialized to $|0\rangle$, and the double circles represent physical qubits initialized to $|+\rangle$.

The quantum computing system 30 performs stabilizer measurement on the surface code 53. Stabilizers are operators that define an error correction code. Error locations are estimated based on information obtained by measuring the stabilizers. Z stabilizers 53a of the surface code 53 are defined on hatched lattice faces, and X stabilizers 53b are defined on white lattice faces.

The quantum computing system 30 performs error detection based on the measurement results of the stabilizers. When an error is detected, the quantum computing system 30 discards the generated ancilla state and performs the ancilla state generation process again. This makes it possible to generate an ancilla state with as few errors as possible.

The error detection using the [[4,1,1,2]] code 52 allows for removal of most errors, but some errors are difficult to remove.

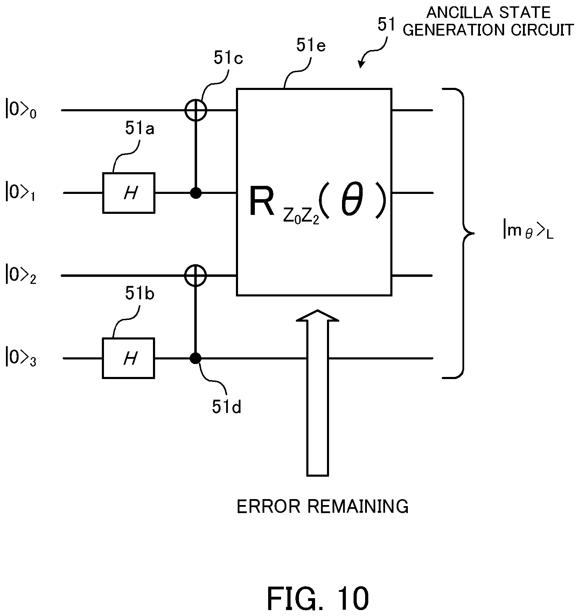

FIG. 10 illustrates an example of an error that is difficult to remove. An example of the error that is difficult to remove is an error that occurs at the time of a gate operation of the two-qubit rotation gate 51e in the ancilla state generation circuit 51. For example, it is difficult to remove some errors that occur immediately after the gate operation of the two-qubit rotation gate 51e. The errors remaining in the two-qubit rotation gate 51e directly lead to an error in the phase rotation gate 43e. The error in the phase rotation gate 43e greatly affects the error rate of the entire quantum computation.

To deal with this, the quantum computing system 30 automatically determines the initialization arrangement and gate execution schedule such that the error rate of the two-qubit rotation gate 51e executed in the ancilla state generation circuit 51 is minimized at the time of execution of quantum computation. The minimization of the error rate of the two-qubit rotation gate 51e reduces the logical error rate of the phase rotation gate 43e.

Hereinafter, a specific method of minimizing the error rate of the two-qubit rotation gate 51e will be described.

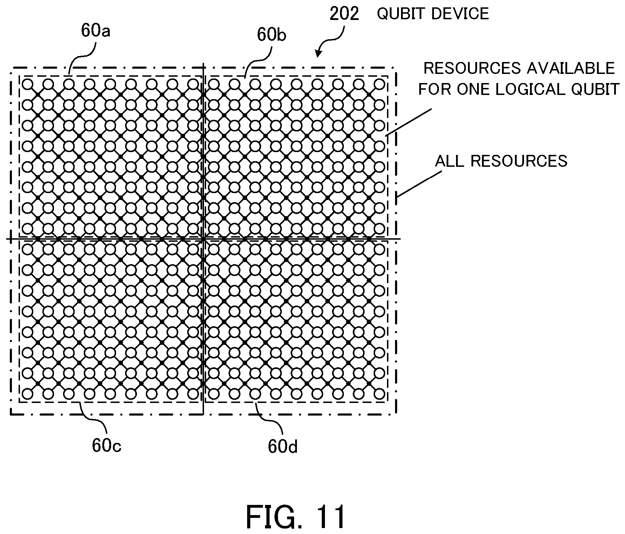

FIG. 11 illustrates an example of mapping physical qubits to logical qubits. For example, in the case where four logical qubits are used for quantum computation, the region of all resources in the qubit device 202 is divided into four regions 60a to 60d. Each of the regions 60a to 60d indicates resources available for one logical qubit.

The state of each logical qubit is expressed using resources (physical qubits represented by white circles or black circles) in the corresponding region. The physical qubits represented by the white circles are data qubits indicating the redundantly encoded state of the logical qubit. The physical qubits represented by the black circles are ancilla qubits for error detection.

In the qubit device 202, the gate operation of a two-qubit gate is possible only between connected qubits. In FIG. 11, two connected qubits are connected by a line.

As illustrated in FIG. 11, resources that are usable to represent the state of a logical qubit are determined in advance. In the quantum computing system 30, each logical qubit is encoded using resources available for the logical qubit, in a way that minimizes errors. In particular, when the phase rotation gate 43e is executed, the quantum computing system 30 determines four physical qubits to be used for the [[4,1,1,2]] code 52 so as to reduce the occurrence of errors in the two-qubit rotation gate 51e in the ancilla state generation circuit 51.

For example, accuracy information of the gate operation of a two-qubit gate between two connected qubits in the qubit device 202 is given in advance to the quantum computing system 30. In the quantum computing system 30, the classical computer 100 performs the following processes in the preparation stage of quantum computation.

[Process 1] The classical computer 100 determines the priority of pairs of connected qubits, i.e., qubit pairs, in descending order of accuracy, on the basis of the accuracy information of the two-qubit gate given to the device.

[Process 2] The classical computer 100 determines candidates for a code arrangement to be used in parallel execution of the ancilla state generation circuit with respect to a target code distance d. The code arrangement is an arrangement of code regions for error correction on a plane on which physical qubits are arranged. The physical qubits in each arranged code region constitute an error correction code.

[Process 3] The classical computer 100 determines an optimal candidate from the candidates determined in Process 2 so that as many qubit pairs with higher orders of priority as possible are included in the ancilla state generation circuit.

[Process 4] The classical computer 100 determines a specific execution procedure of the generation circuit and an initialization method to be executed in expansion, on the basis of the optimal arrangement.

[Process 5] The classical computer 100 saves the optimized arrangement information.

Encoding the states of the qubits indicated in the quantum circuit on the basis of the optimized arrangement information leads to reducing errors in quantum computation. Hereinafter, a quantum computation process in the quantum computing system 30 will be described in detail.

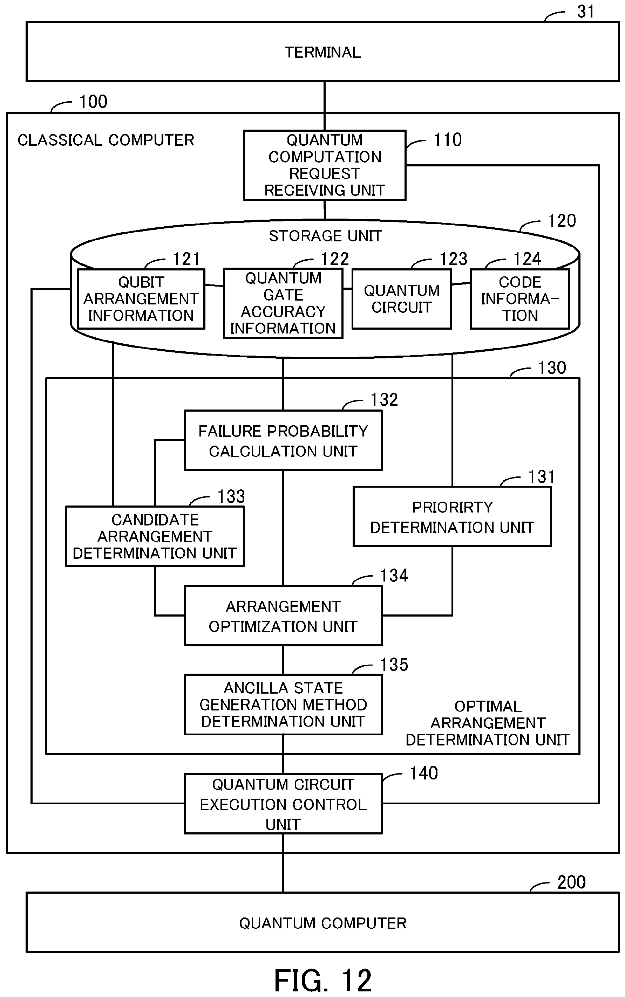

FIG. 12 is a block diagram illustrating an example of functions of a classical computer for quantum computation. The classical computer 100 includes a quantum computation request receiving unit 110, a storage unit 120, an optimal arrangement determination unit 130, and a quantum circuit execution control unit 140.

The quantum computation request receiving unit 110 receives a quantum computation request from a terminal 31. The quantum computation request includes, for example, a quantum circuit 123 to be executed, code information 124 indicating a code to be used, and others. The quantum computation request receiving unit 110 stores the quantum circuit 123 and the code information 124 included in the quantum computation request in the storage unit 120. Upon receiving the execution result of the quantum circuit from the quantum circuit execution control unit 140, the quantum computation request receiving unit 110 transmits the received execution result to the terminal 31.

The storage unit 120 stores information to be used to execute quantum computation. For example, the storage unit 120 stores qubit arrangement information 121, quantum gate accuracy information 122, a quantum circuit 123, and code information 124. The qubit arrangement information 121 is information indicating the connectivity of the physical qubits in the qubit device 202. The quantum gate accuracy information 122 is information indicating error rates of a gate operation on qubits. The quantum circuit 123 is a quantum computation model in which a procedure of quantum computation to be executed is represented by quantum gates. The code information 124 is information such as a code scheme used for redundancy of qubits.

The optimal arrangement determination unit 130 determines the arrangement of a code for executing the phase rotation gate 43e. For example, the optimal arrangement determination unit 130 determines physical qubits to be used for representing the [[4,1,1,2]] code 52. In order to determine the optimal arrangement, the optimal arrangement determination unit 130 includes a priority determination unit 131, a failure probability calculation unit 132, a candidate arrangement determination unit 133, an arrangement optimization unit 134, and an ancilla state generation method determination unit 135.

The priority determination unit 131 determines, for each connected physical qubit pair, the order of priority for use in the gate operation of the two-qubit rotation gate 51e in which error correction is difficult. For example, the priority determination unit 131 sets a higher order of priority for a physical qubit pair having a lower error rate in the gate operation of a two-qubit gate.

The failure probability calculation unit 132 calculates a probability of failure in ancilla state generation. For example, the failure probability calculation unit 132 calculates the ancilla state generation failure probability on the basis of the accuracy information of the two-qubit gate between the physical qubits.

The candidate arrangement determination unit 133 determines arrangement candidates of the code representing a logical qubit on the basis of the code information 124 and the ancilla state generation failure probability. For example, the candidate arrangement determination unit 133 determines a candidate for a set of physical qubits constituting the code with the code distance indicated in the code information 124 from the resources that are available for the logical qubit.

The arrangement optimization unit 134 determines an optimal arrangement from among the arrangement candidates. For example, the arrangement optimization unit 134 determines that an arrangement candidate that minimizes the error rate is the optimal arrangement.

The ancilla state generation method determination unit 135 determines an ancilla state generation method according to the optimal arrangement. For example, the ancilla state generation method determination unit 135 determines a physical qubit group to be used for generating an ancilla state, a qubit pair to be used in the gate operation of the two-qubit rotation gate 51e for generating the ancilla state, an initial value of a code at the time of expansion to a predetermined code distance, and others.

The quantum circuit execution control unit 140 acquires the quantum circuit 123 to be executed from the storage unit 120, and causes the quantum computer 200 to execute quantum computation according to the quantum circuit 123. At this time, the quantum circuit execution control unit 140 executes the quantum computation using the logical qubit obtained by encoding qubits based on the code arrangement determined by the optimal arrangement determination unit 130. The quantum circuit execution control unit 140 transmits the execution result of the quantum circuit to the quantum computation request receiving unit 110.

The function of each element illustrated in FIG. 12 may be implemented by causing the processor 101 to execute a program module corresponding to the element, for example.

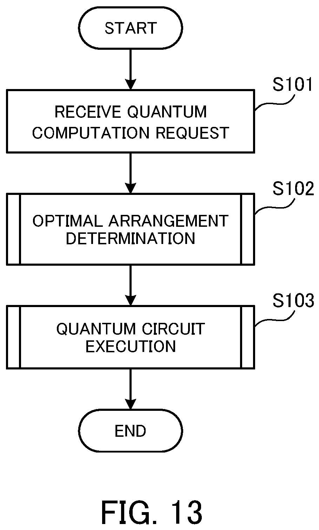

FIG. 13 is a flowchart illustrating an example procedure for a quantum computation process. Hereinafter, the process illustrated in FIG. 13 will be described in order of step numbers.

[Step S101] The quantum computation request receiving unit 110 receives a quantum computation request from the terminal 31. The quantum computation request receiving unit 110 stores the quantum circuit 123 and the code information 124 included in the quantum computation request in the storage unit 120.

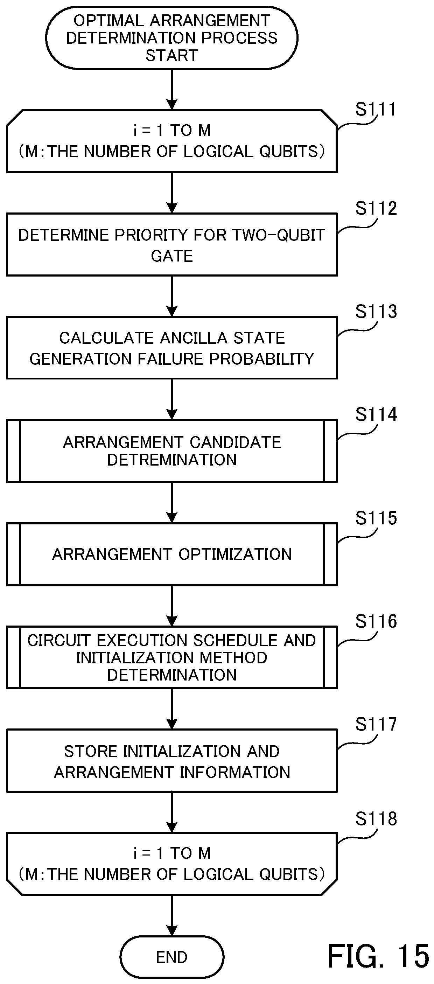

[Step S102] The optimal arrangement determination unit 130 performs an optimal arrangement determination process of a code for the phase rotation gate 43e. By the optimal arrangement determination process, physical qubits that are used for the code representing a logical qubit when the gate operation of the phase rotation gate 43e is performed and physical qubits that are used for the [[4,1,1,2]] code 52 for generating an ancilla state are determined. A detailed procedure of the optimal arrangement determination process will be described later (see FIG. 15).

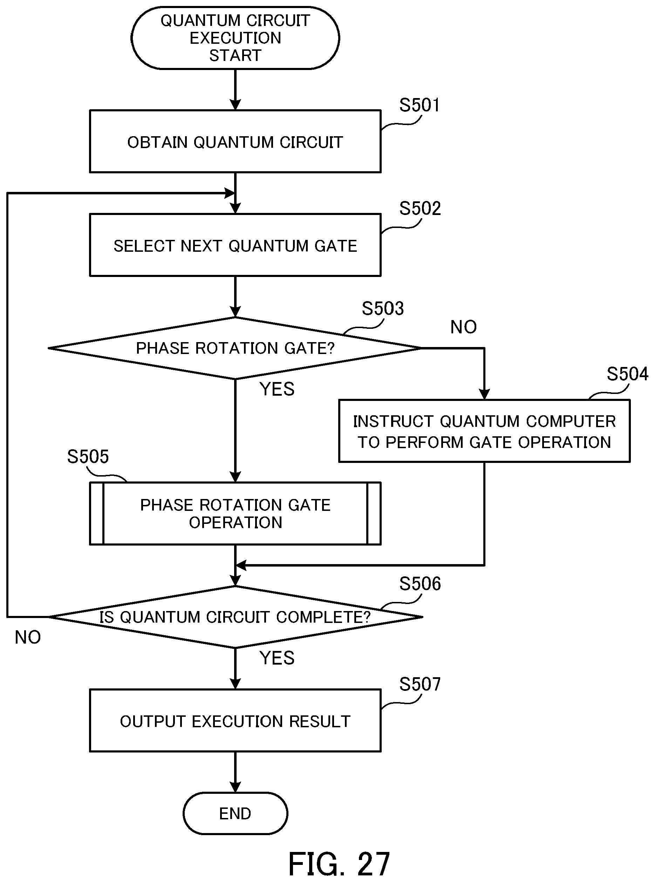

[Step S103] The quantum circuit execution control unit 140 controls the quantum computer 200 to execute the quantum circuit 123. Then, the quantum circuit execution control unit 140 transmits the execution result of the quantum circuit to the quantum computation request receiving unit 110. A detailed procedure of the quantum circuit execution process will be described later (see FIG. 27).

Next, the optimal arrangement determination process will be specifically described.

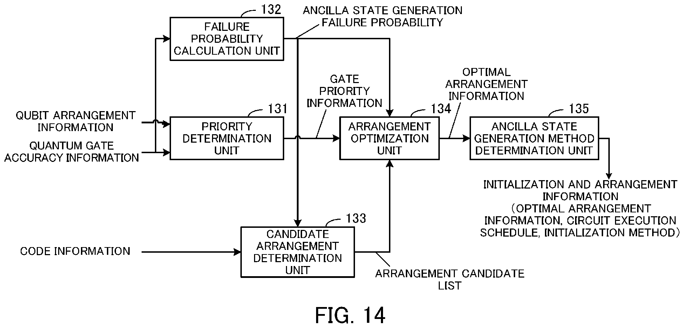

FIG. 14 illustrates an example of a flow of information in the optimal arrangement determination process. The priority determination unit 131 receives the qubit arrangement information 121 and the quantum gate accuracy information 122, and outputs gate priority information. The failure probability calculation unit 132 receives the quantum gate accuracy information 122 and outputs an ancilla state generation failure probability. The candidate arrangement determination unit 133 receives the ancilla state generation failure probability and the code information 124, and outputs an arrangement candidate list. The arrangement optimization unit 134 receives the gate priority information, the ancilla state generation failure probability, and the arrangement candidate list, and outputs optimal arrangement information. The ancilla state generation method determination unit 135 receives the optimal arrangement information and outputs initialization and arrangement information. The initialization and arrangement information includes information including optimal arrangement information, a circuit execution schedule indicating a gate operation procedure of the ancilla state generation circuit, and a surface code initialization method.

Next, a detailed procedure of the optimal arrangement determination process will be described.

FIG. 15 is a flowchart illustrating an example procedure for an optimal arrangement determination process. Hereinafter, the process illustrated in FIG. 15 will be described in order of step numbers.

[Step S111] The optimal arrangement determination unit 130 repeats steps S112 to S117 while incrementing a loop variable i from 1 to M. M denotes the number of logical qubits used for the quantum computation. It is assumed that, for each logical qubit, resources (see FIG. 11) that are available for the logical qubit are already determined. For example, when the number of logical qubits used for the quantum computation is four, four regions 60a to 60d obtained by dividing the region of the qubit device 202 into four are allocated as resources available for the logical qubits.

[Step S112] The priority determination unit 131 determines the order of priority for each qubit pair, which is a pair of connected physical qubits, with respect to the gate operation of a two-qubit gate. For example, the priority determination unit 131 sets a higher order of priority for a qubit pair having a lower error rate of the two-qubit gate indicated in the quantum gate accuracy information 122.

[Step S113] The failure probability calculation unit 132 calculates an ancilla state generation failure probability on the basis of the quantum gate accuracy information 122. The calculated ancilla state generation failure probability is an average probability that the generation of an ancilla state fails when the ancilla state is generated using physical qubits that are part of the resources available for the logical qubit.

For example, the failure probability calculation unit 132 performs numerical simulation of ancilla state generation on the basis of the error rates of the qubit pairs in the region available for the logical qubit, and calculates a probability of failure in the ancilla state generation. Alternatively, the failure probability calculation unit 132 may measure the ancilla state failure probability by causing the quantum computer 200 to repeatedly execute the ancilla state generation circuit 51 by using the physical qubits in the region available for the logical qubit.

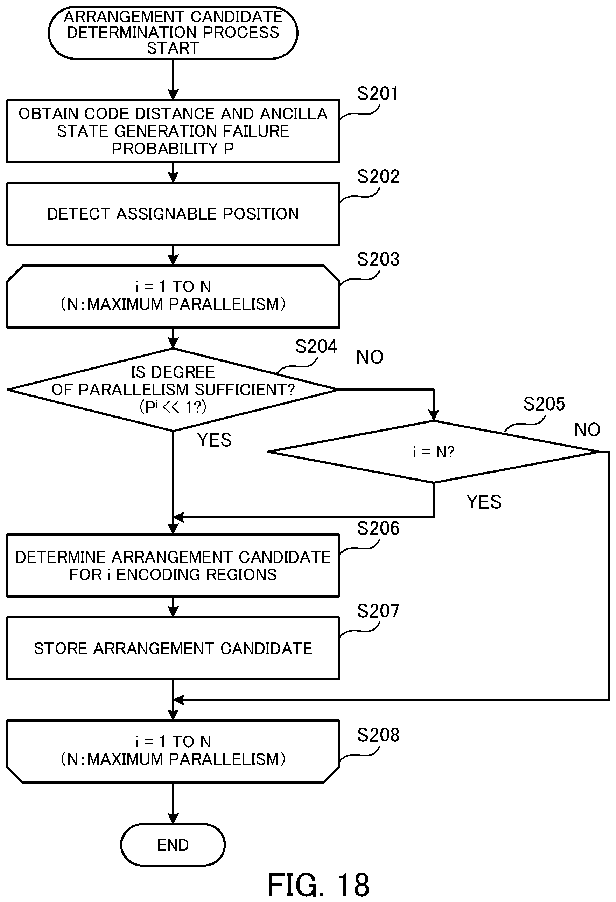

(Step S114) The candidate arrangement determination unit 133 performs an arrangement candidate determination process. By the arrangement candidate determination process, the ancilla state generation failure probability is obtained, and the arrangement candidate list for an encoding region is generated. Details of the arrangement candidate determination process will be described later (see FIG. 18).

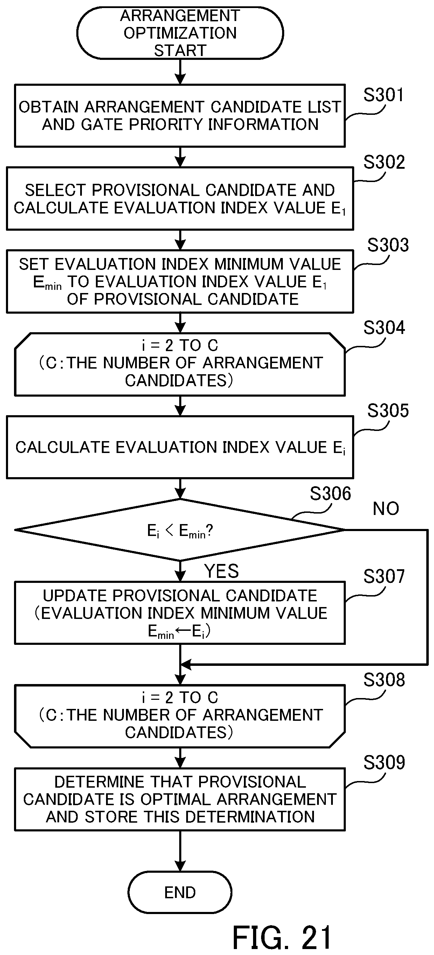

[Step S115] The arrangement optimization unit 134 executes an arrangement optimization process. Optimal arrangement information is generated by the arrangement optimization process. Details of the arrangement optimization process will be described later (see FIG. 21).

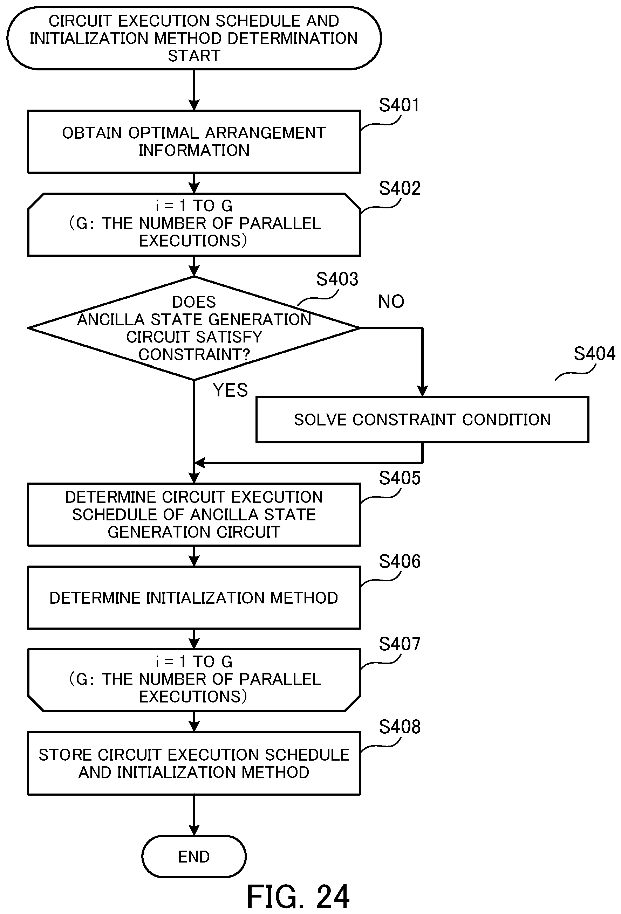

[Step S116] The ancilla state generation method determination unit 135 executes a circuit execution schedule and initialization method determination process. By this process, initialization and arrangement information including optimal arrangement information, a circuit execution schedule, and an initialization method is generated. Details of the circuit execution schedule and initialization method determination process will be described later (see FIG. 24).

[Step S117] The optimal arrangement determination unit 130 stores the initialization and arrangement information in the memory 102 or the storage device 103.

[Step S118] When steps S112 to S117 are complete for all logical qubits of i = 1 to M, the optimal arrangement determination unit 130 completes the optimal arrangement determination process.

Next, steps S112 to S117 in FIG. 15 will be specifically described. The order of priority for each qubit pair is determined based on the accuracy of the two-qubit gate operation between the qubit pair.

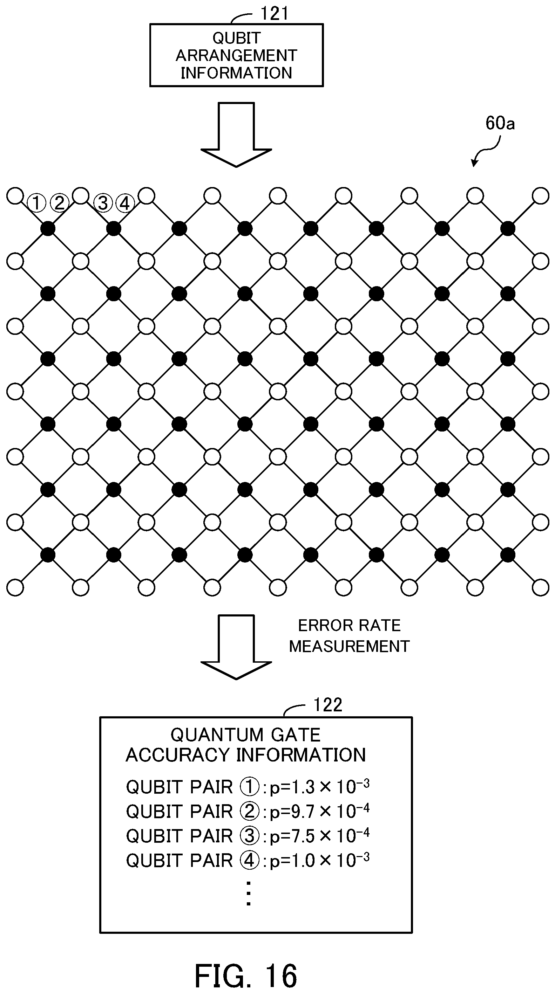

FIG. 16 illustrates examples of accuracy for qubit pairs. For example, it is assumed that an optimal arrangement is determined for a logical qubit that uses the resources in the region 60a. The qubit arrangement information 121 indicates the arrangement and connectivity of the physical qubits in the region 60a. In the example of FIG. 16, the data qubits (white circles) in the region 60a are connected to their neighboring ancilla qubits (black circles).

In the quantum gate accuracy information 122, an error rate when the gate operation of a two-qubit gate is performed on a qubit pair of connected qubits is set. The error rate is measured in advance by causing the quantum computer 200 to perform the gate operation of the two-qubit gate on the qubit pair. A lower error rate indicates that the qubit pair exhibits higher accuracy.

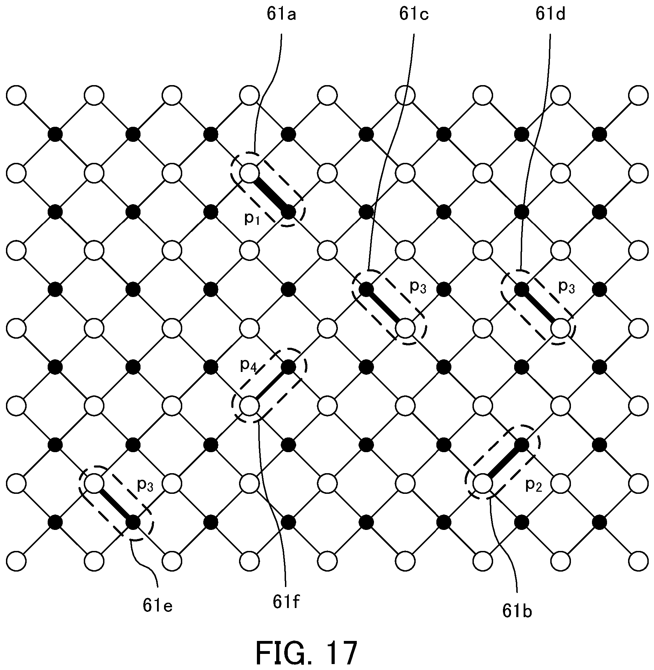

FIG. 17 illustrates an example of determined orders of priority. In FIG. 17, a thicker line connecting qubits indicates that the qubit pair exhibits higher accuracy. On the side of each qubit pair 61a to 61f, an error rate ($p_1 < p_2 < p_3 < p_4$) when the two-qubit gate is applied is indicated.

The qubit pair 61a (error rate: $p_1$) has the highest accuracy. The qubit pair 61b (error rate: $p_2$) has the next highest accuracy. The qubit pairs 61c to 61e (error rate: $p_3$) have the next highest accuracy. The qubit pair 61f (error rate: $p_4$) has the next highest accuracy.

In this case, the qubit pair 61a has the highest order of priority. The qubit pair 61b has the next highest order of priority. The qubit pairs 61c to 61e have the next highest orders of priority. The qubit pair 61f has the next highest order of priority. The other qubit pairs have orders of priority lower than that of the qubit pair 61f.

In this manner, the priority determination unit 131 gives an order of priority, which is used at the time of the gate operation, to each qubit pair on the basis of the accuracy exhibited by the qubit pairs. The orders of priority are transmitted to the arrangement optimization unit 134 as the gate priority information.

Next, the arrangement candidate determination process will be described in detail.

FIG. 18 is a flowchart illustrating an example procedure for the arrangement candidate determination process. Hereinafter, the process illustrated in FIG. 18 will be described in order of step numbers.

[Step S201] The candidate arrangement determination unit 133 obtains a code distance and an ancilla state generation failure probability P. For example, the candidate arrangement determination unit 133 extracts the code distance from the code information 124 stored in the storage unit 120. Further, the candidate arrangement determination unit 133 acquires the ancilla state generation failure probability from the failure probability calculation unit 132.

[Step S202] The candidate arrangement determination unit 133 detects positions where the ancilla state generation circuit is assignable in the resources available for the logical qubit.

[Step S203] The candidate arrangement determination unit 133 repeats steps S204 to S207 while incrementing a loop variable i from 1 to N. The loop variable i denotes the degree of parallelism i of the execution of the ancilla quantum generation circuit, and N is the maximum degree of parallelism of the ancilla quantum generation circuit that is executable with the physical qubits used in a code of size indicated by the code distance.

[Step S204] The candidate arrangement determination unit 133 determines whether the degree of parallelism i is sufficient. For example, when "$P^i \ll 1$" (for example, "$P^i$" is less than a predetermined value, such as 0.01) is satisfied based on the ancilla state generation failure probability P, the candidate arrangement determination unit 133 determines that the degree of parallelism i is sufficient. If the degree of parallelism is sufficient, the candidate arrangement determination unit 133 advances the process to step S206. If the degree of parallelism is insufficient, the candidate arrangement determination unit 133 advances the process to step S205.

[Step S205] The candidate arrangement determination unit 133 determines whether the degree of parallelism i is the maximum parallelism N (i = N). If the degree of parallelism i is the maximum parallelism N, the candidate arrangement determination unit 133 advances the process to step S206. That is, if the degree of parallelism is insufficient but the degree of parallelism is the maximum parallelism, the process proceeds to step S206. If the degree of parallelism i is not the maximum parallelism N, the candidate arrangement determination unit 133 advances the process to step S208.

[Step S206] The candidate arrangement determination unit 133 determines arrangement candidates for i encoding regions for parallel execution of the ancilla state generation circuit 51, in the region of the resources available for the logical qubit.

[Step S207] The candidate arrangement determination unit 133 stores the determined arrangement candidates in the memory 102 or the storage device 103.

[Step S208] When the degree of parallelism i reaches the maximum degree of parallelism N, the candidate arrangement determination unit 133 completes the arrangement candidate determination process.

In this way, a plurality of arrangement candidates for the ancilla state generation circuit 51 are generated.

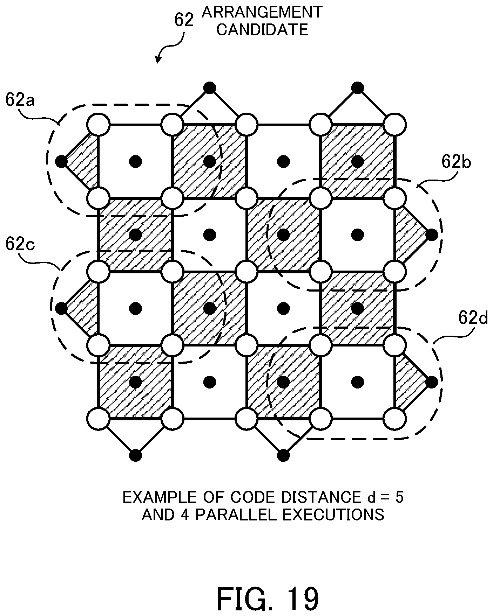

FIG. 19 illustrates an example of an arrangement candidate for the ancilla state generation circuit. For example, it is assumed that the code distance used for representing a logical qubit is "d = 5" and the degree of parallelism is "4". The physical qubits (white circles) used to represent the logical qubit with this code distance are 25 physical qubits, which are arranged in a lattice in which five physical qubits are arranged vertically and five physical qubits are arranged horizontally. The candidate arrangement determination unit 133 determines four positions 62a to 62d at which the [[4,1,1,2]] code 52 is arrangeable in the region with code distance "5".

The arrangement candidate 62 with the four positions 62a to 62d where the ancilla state generation circuit 51 is arranged allows four parallel executions of the ancilla state generation circuit 51. In this case, at least one execution of the ancilla state generation circuit 51 may succeed in generating an ancilla state. Therefore, the parallelization increases the probability of success in the generation of an ancilla state. For example, in the case of n parallel executions (n is a natural number), the ancilla state generation failure probability is improved to $P^n$.

The degree of parallelism may be increased as the code distance increases. Therefore, the candidate arrangement determination unit 133 sets the degree of parallelism so that the ancilla state generation failure probability becomes sufficiently close to "0". When the code distance is large, the candidate arrangement determination unit 133 does not need to place the ancilla state generation circuits 51 to the limit (the maximum parallelism).

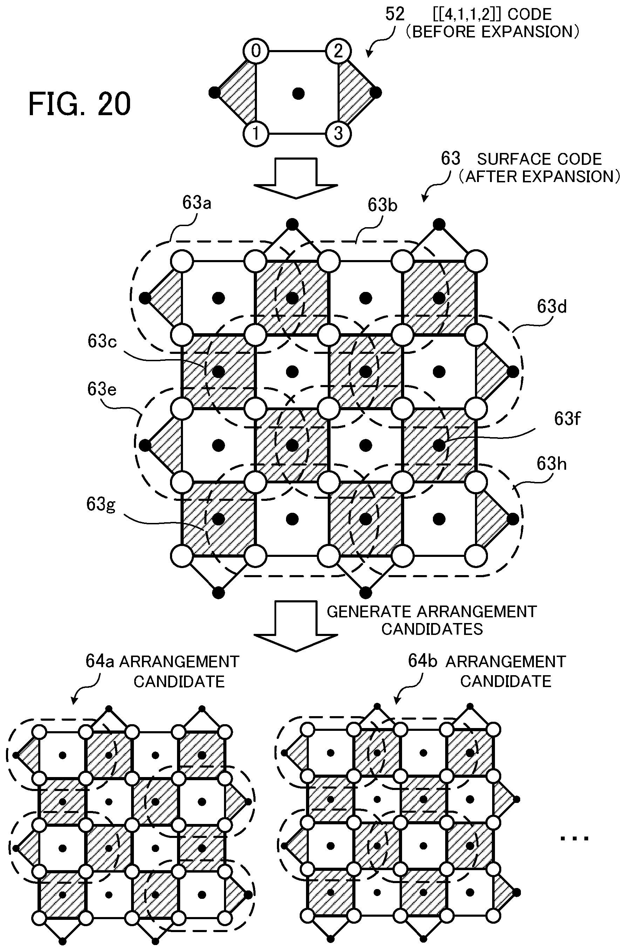

FIG. 20 illustrates an example of a plurality of generated arrangement candidates. A code before expansion is, for example, a [[4,1,1,2]] code 52. It is assumed that a code designated for the execution of a quantum circuit is a surface code 63 with code distance "5". In this case, in the surface code 63, regions that each match the stabilizer types (white and hatched) of the [[4,1,1,2]] code 52 are taken as encoding regions 63a to 63h in which the ancilla state generation circuit 51 is arrangeable.

In the surface code 63, the sharing of ancilla qubits corresponding to black circles is allowed by optimizing the assignment of the ancilla qubits. Therefore, the candidate arrangement determination unit 133 places the [[4,1,1,2]] code 52 before expansion in regions among the eight encoding regions 63a to 63h, which allow the arrangement, of the surface code 63 in such a manner that the data qubits (white circles) representing the state of the logical qubit do not overlap each other. Note that the candidate arrangement determination unit 133 places a plurality of [[4,1,1,2]] codes 52 with their orientations aligned.

While changing the degree of parallelism, the candidate arrangement determination unit 133 determines all possible placement patterns at each degree of parallelism, and generates corresponding arrangement candidates 64a, 64b, and ⋯. As a result, a plurality of arrangement candidates 64a, 64b, ⋯ for executing the ancilla state generation circuit 51 in parallel are obtained.

In the example of FIG. 20, the candidate arrangement determination unit 133 fixes the position of the surface code 63 and generates the arrangement candidates 64a, 64b, and ⋯ in the surface code 63. However, the position of the surface code 63 may be changed within the resources available for the logical qubit. Therefore, while changing the position of the surface code 63 within the resources available for the logical qubit, the candidate arrangement determination unit 133 generates arrangement candidates at each position.

The candidate arrangement determination unit 133 transmits an arrangement candidate list indicating the generated arrangement candidates to the arrangement optimization unit 134. Then, the arrangement optimization unit 134 determines an optimal arrangement from the arrangement candidates listed on the arrangement candidate list.

FIG. 21 is a flowchart illustrating an example procedure for an arrangement optimization process. Hereinafter, the process illustrated in FIG. 21 will be described in order of step numbers.

[Step S301] The arrangement optimization unit 134 obtains an arrangement candidate list and gate priority information. For example, the arrangement optimization unit 134 obtains the arrangement candidate list from the candidate arrangement determination unit 133. Further, the arrangement optimization unit 134 obtains the gate priority information from the priority determination unit 131.

[Step S302] The arrangement optimization unit 134 selects a provisional candidate of the optimal arrangement and calculates an evaluation index value $E_1$ of the provisional candidate. For example, the arrangement optimization unit 134 sets the top arrangement candidate on the arrangement candidate list as the provisional candidate. The evaluation index value is a value that is calculated based on the error rates of the two-qubit gate for the qubit pairs included in the arrangement candidate and the generation failure probability. For example, a smaller evaluation index value indicates a higher likelihood of success (i.e., a lower likelihood of failure) in the generation of an ancilla state.

[Step S303] The arrangement optimization unit 134 sets the evaluation index minimum value $E_{min}$ to the evaluation index value $E_1$ of the provisional candidate ($E_{min} \leftarrow E_1$).

[Step S304] The arrangement optimization unit 134 repeats steps S305 to S307 while incrementing the number i of the arrangement candidate indicating the placement of the arrangement candidate on the arrangement candidate list from 2 to C. C denotes the number of arrangement candidates.

[Step S305] The arrangement optimization unit 134 calculates the evaluation index value $E_i$ of the i-th arrangement candidate.

[Step S306] The arrangement optimization unit 134 determines whether the evaluation index value $E_i$ is smaller than the evaluation index minimum value $E_{min}$. If the evaluation index value $E_i$ is smaller, the arrangement optimization unit 134 advances the process to step S307. If the evaluation index value $E_i$ is equal to or greater than the evaluation index minimum value $E_{min}$, the arrangement optimization unit 134 advances the process to step S308.

[Step S307] The arrangement optimization unit 134 updates the provisional candidate to the i-th arrangement candidate.

[Step S308] When the processing up to the C-th arrangement candidate is completed, the arrangement optimization unit 134 advances the processing to step S309.

[Step S309] The arrangement optimization unit 134 determines that the provisional arrangement candidate is the optimal arrangement, and stores information on the optimal arrangement in the memory 102 or the storage device 103.

The optimal arrangement is determined through the above procedure.

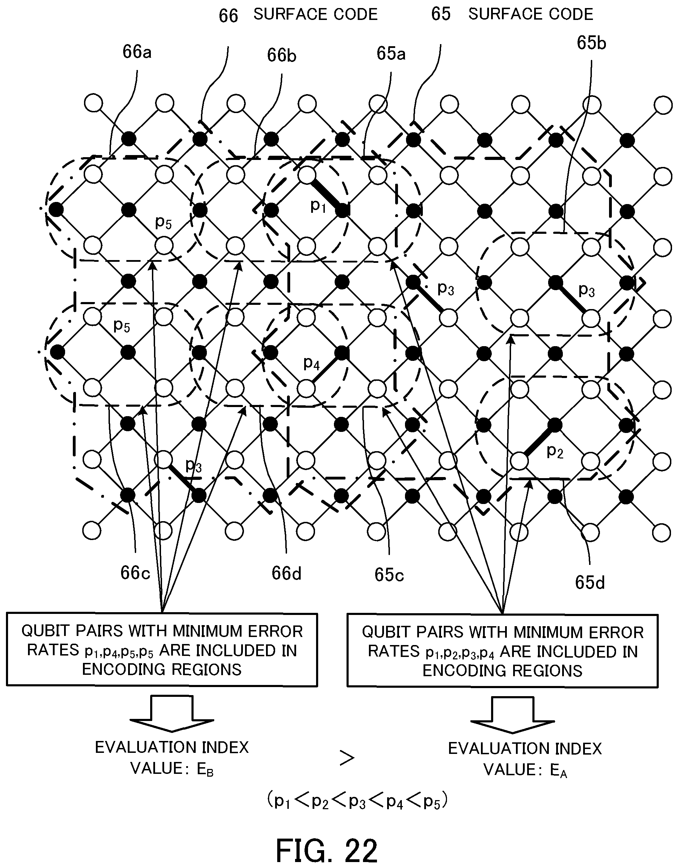

FIG. 22 illustrates an example of an arrangement candidate evaluation method. FIG. 22 illustrates a comparison example of an arrangement candidate in a surface code 65 with code distance "5" and an arrangement candidate in a surface code 66 shifted from the surface code 65.

The arrangement candidate in the surface code 65 includes encoding regions 65a to 65d. The lowest value (minimum error rate) of the error rates of the qubit pairs in the encoding region 65a is "$p_1$". The lowest value of the error rates of the qubit pairs in the encoding region 65b is "$p_3$". The lowest value of the error rates of the qubit pairs in the encoding region 65c is "$p_4$". The lowest value of the error rates of the qubit pairs in the encoding region 65d is "$p_2$".

The arrangement candidates in the surface code 66 includes encoding regions 66a to 66d. The lowest value of the error rates of the qubit pairs in the encoding region 66a is "$p_5$". The lowest value of the error rates of the qubit pairs in the encoding region 66b is "$p_1$". The lowest value of the error rates of the qubit pairs in the encoding region 66c is "$p_5$". The lowest value of the error rates of the qubit pairs in the encoding region 66d is "$p_4$". The error rates have a relationship of "$p_1 < p_2 < p_3 < p_4 < p_5$".

As more qubit pairs having lower error rates are included in the encoding regions of an arrangement candidate, the arrangement candidate has a higher probability of success in the generation of an ancilla state using the physical qubits in the encoding regions. Therefore, with respect to each encoding region constituting the arrangement candidate, the arrangement optimization unit 134 extracts the minimum error rate among the qubit pairs in the encoding region. Then, the arrangement optimization unit 134 calculates the evaluation index value of the arrangement candidate using the minimum error rates extracted from the encoding regions constituting the arrangement candidate.

For example, the arrangement optimization unit 134 calculates the evaluation index value $E_A$ of the arrangement candidate including the encoding regions 65a to 65d based on the minimum error rates "$p_1$, $p_2$, $p_3$, $p_4$". Further, the arrangement optimization unit 134 calculates the evaluation index value $E_B$ of the arrangement candidate including the encoding regions 66a to 66d based on the minimum error rates "$p_1$, $p_4$, $p_5$, $p_5$".

A smaller evaluation index value is calculated from lower error rates. Therefore, the evaluation index value $E_A$ of the arrangement candidate including the encoding regions 65a to 65d is smaller than the evaluation index value $E_B$ of the arrangement candidate including the encoding regions 66a to 66d.

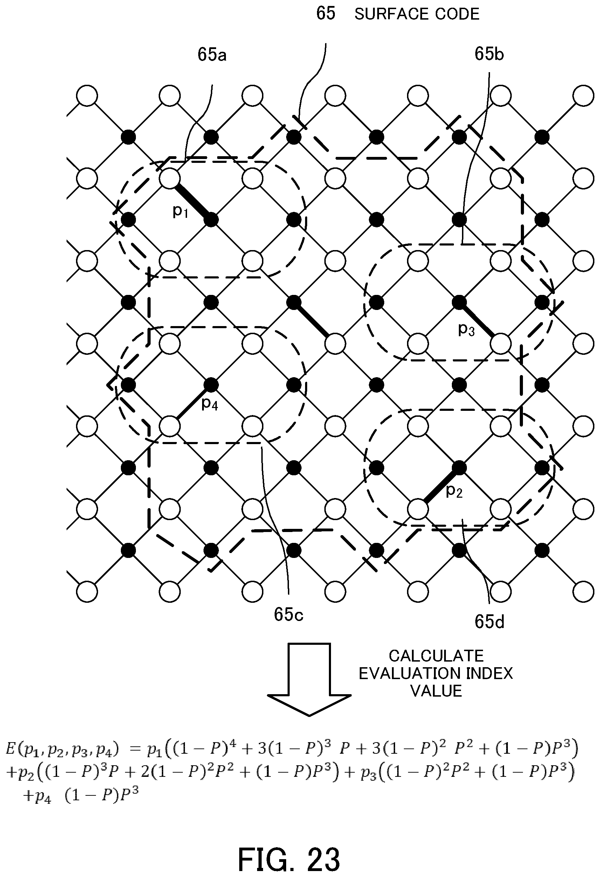

FIG. 23 illustrates an example of a method of calculating an evaluation index value. FIG. 23 illustrates an example of calculating an evaluation index value for the arrangement candidate including the encoding regions 65a to 65d.

In the case where ancilla state generation circuits 51 are executed in parallel by the quantum computer 200, a plurality of ancilla state generation circuits 51 may pass error detection (no error is detected), and errors may be detected in the other ancilla state generation circuits 51. In this case, it is considered that, in the ancilla state generation circuits 51 that have passed the error detection, the ancilla state generated with the encoding region having the lowest minimum error rate has the lowest probability of causing an error in the surface code. Therefore, the arrangement optimization unit 134 takes, as an expansion source, the ancilla state generated by the ancilla state generation circuit 51 using the qubit pair with the lowest error rate of the two-qubit rotation gate, and expands the ancilla state to the surface code 65.

In the case of four parallel executions, the following five patterns are considered as patterns in which generated ancilla states pass the error detection.

The first pattern is a pattern in which the ancilla states generated by all ancilla state generation circuits 51 pass the error detection. The occurrence probability of the first pattern is expressed as "$(1 - P)^4$" using the ancilla state generation failure probability P. The ancilla states generated by all the ancilla state generation circuits 51 pass the error detection. Therefore, the ancilla state generated by the ancilla state generation circuit 51 using the encoding region 65a including the qubit pair having the lowest minimum error rate "$p_1$" among the minimum error rates "$p_1$, $p_4$, $p_5$, $p_5$" also passes the error detection. Therefore, the error rate of the ancilla state after expansion to the surface code is estimated as "$p_1$".

The second pattern is a pattern in which the ancilla states generated by three ancilla state generation circuits 51 pass the error detection. The occurrence probability of the second pattern is expressed as "$(1 - P)^3 P$". In this case, there are three patterns (error rate "$p_1 \times 3$") in which the ancilla state generated by the ancilla state generation circuit 51 using the encoding region 65a passes the error detection. There is one pattern (error rate "$p_2$") in which an error is detected in the ancilla state generated by the ancilla state generation circuit 51 using the encoding region 65a.

The third pattern is a pattern in which the ancilla states generated by two ancilla state generation circuits 51 pass the error detection. The occurrence probability of the third pattern is expressed as "$(1 - P)^2 P^2$". In this case, there are three patterns (error rate "$p_1 \times 3$") in which the ancilla state generated by the ancilla state generation circuit 51 using the encoding region 65a passes the error detection. There are two patterns (error rate "$p_2 \times 2$") in which an error is detected in the ancilla state generated by the ancilla state generation circuit 51 using the encoding region 65a and the ancilla state generated by the ancilla state generation circuit 51 using the encoding region 65d passes the error detection. There is also one pattern (error rate "$p_3 \times 1$") in which errors are detected in the ancilla states generated by the ancilla state generation circuits 51 using the encoding regions 65a and 65d, and the ancilla state generated by the ancilla state generation circuit 51 using the encoding region 65b passes the error detection.

The fourth pattern is a pattern in which the ancilla state generated by one ancilla state generation circuit 51 passes error detection. The occurrence probability of the fourth pattern is expressed as "$(1 - P)P^3$". In this case, there is one pattern (error rate "$p_1$") in which the ancilla state generated by the ancilla state generation circuit 51 using the encoding region 65a passes the error detection. There is one pattern (error rate "$p_2$") in which the ancilla state generated by the ancilla state generation circuit 51 using the encoding region 65d passes the error detection. There is one pattern (error rate "$p_3$") in which the ancilla state generated by the ancilla state generation circuit 51 using the encoding region 65b passes the error detection. There is one pattern (error rate "$p_4$") in which the ancilla state generated by the ancilla state generation circuit 51 using the encoding region 65c passes the error detection.

The fifth pattern is a pattern in which all the ancilla state generation circuits 51 fail to generate ancilla states. The occurrence probability of the fifth pattern is "$P^4$". In the case of the fifth pattern, ancilla states are generated again. Therefore, the occurrence probability of the fifth pattern is not used for the calculation of the evaluation index value.

For each of the first to fourth patterns excluding the fifth pattern, the arrangement optimization unit 134 multiplies the occurrence probability of the pattern by the error rate in the pattern. "$(1 - P)^4 \times p_1$" is calculated for the first pattern. "$(1 - P)^3 P(p_1 \times 3 + p_2)$" is calculated for the second pattern. "$(1 - P)^2 P^2(p_1 \times 3 + p_2 \times 2 + p_3)$" is calculated for the third pattern. "$(1 - P)P^3(p_1 + p_2 + p_3 + p_4)$" is calculated for the fourth pattern.

Then, the arrangement optimization unit 134 sets the sum of the multiplication results for these patterns as the evaluation index value of the arrangement candidate. Therefore, the evaluation index value is expressed by the following equation.

$$E(p_1,p_2,p_3,p_4)=p_1((1-P^4+3(1-P^3P+3(1-P)^2P^2+(1-P)P^3)+p_2((1-P)^3P+2(1-P)^2P^2+(1-P)P^3) \quad + \quad p_3((1-P)^2P^2+(1-P)P^3)+p_4(1-P)P^3$$

Such evaluation index values are calculated for all arrangement candidates. Then, the arrangement candidate having the lowest evaluation index value is determined as the optimal arrangement.

The calculation formula of an evaluation index value is a weighted sum in which the error rates "$p_1, p_2, p_3,$ and $p_4$" are variables. At this time, the lower the error rate of the variable, the greater a coefficient indicating its weight. For example, the weight "$((1 - P^4 + 3(1 - P^3)P + 3(1 - P)^2P^2 + (1 - P)P^3)$" of the error rate "$p_1$" is greater than the weight "$((1 - P)^3P + 2(1 - P)^2P^2 + (1 - P)P^3)$" of the error rate "$p_2$" ($p_2 > p_1$).

The calculation formula is the weighted sum as described above. Therefore, a lower error rate "$p_1$" among the error rates "$p_1, p_2, p_3,$ and $p_4$" contributes the most to decreasing the evaluation index value, and a lower error rate "$p_2$" contributes the second most to decreasing the evaluation index value.

This calculation corresponds to the case of adopting an ancilla state generated in an encoding region having a low minimum error rate as an input to the gate teleportation circuit 50 when the ancilla states generated in a plurality of encoding regions in an arrangement candidate pass error detection. That is, by preferentially adopting the ancilla state generated by applying the two-qubit rotation gate to a qubit pair having a low error rate, it is possible to reduce the probability of adopting an ancilla state that passes the error detection although the generation of the ancilla state actually fails. As a result, a lower evaluation index value is calculated for an arrangement candidate having a higher probability that an ancilla state is correctly generated.

When the optimal arrangement is determined, the ancilla state generation method determination unit 135 performs a circuit execution schedule and initialization method determination process.

FIG. 24 is a flowchart illustrating an example procedure for the circuit execution schedule and initialization method determination process. Hereinafter, the process illustrated in FIG. 24 will be described in order of step numbers.

(Step S401) The ancilla state generation method determination unit 135 obtains optimal arrangement information from the arrangement optimization unit 134.

[Step S402] The ancilla state generation method determination unit 135 repeats steps S403 to S406 while incrementing a loop variable i from 1 to **G**. G denotes the degree of parallelism of the ancilla state generation circuit 51 in the optimal arrangement.

[Step S403] The ancilla state generation method determination unit 135 determines whether a constraint on the gate operation is satisfied when the physical qubits of the i-th encoding region are assigned to the qubits of the ancilla state generation circuit 51. The constraint on the gate operation is that a qubit pair that is a gate operation target of the two-qubit gate is mutually connected in the qubit device 202. If the constraint is satisfied, the ancilla state generation method determination unit 135 advances the process to step S405. If the constraint is not satisfied, the ancilla state generation method determination unit 135 advances the process to step S404.

[Step S404] The ancilla state generation method determination unit 135 solves the constraint condition. For example, the ancilla state generation method determination unit 135 performs correction such as addition of swap gates to the ancilla state generation circuit 51 so that the constraint condition is satisfied when the physical qubits in the encoding region are assigned to the qubits of the ancilla state generation circuit 51.

[Step S405] The ancilla state generation method determination unit 135 determines a circuit execution schedule indicating a gate operation procedure of the ancilla state generation circuit 51. For example, the ancilla state generation method determination unit 135 determines the circuit execution schedule so that a plurality of quantum gates that are executable simultaneously are simultaneously executed.

(Step S406) The ancilla state generation method determination unit 135 determines a method for initializing the surface code in the case where the ancilla state generated by the ancilla state generation circuit 51 in the i-th encoding region passes the error detection and is used as an input to the phase rotation gate 43e.

[Step S407] When the loop variable i has reached G, the ancilla state generation method determination unit 135 advances the process to step S408.

[Step S408] The ancilla state generation method determination unit 135 stores information indicating the circuit execution schedule and the initialization method in the memory 102 or the storage device 103.

In this way, the circuit execution schedule and the initialization method are determined. The circuit execution schedule indicates a gate operation procedure that satisfies actual device constraints.

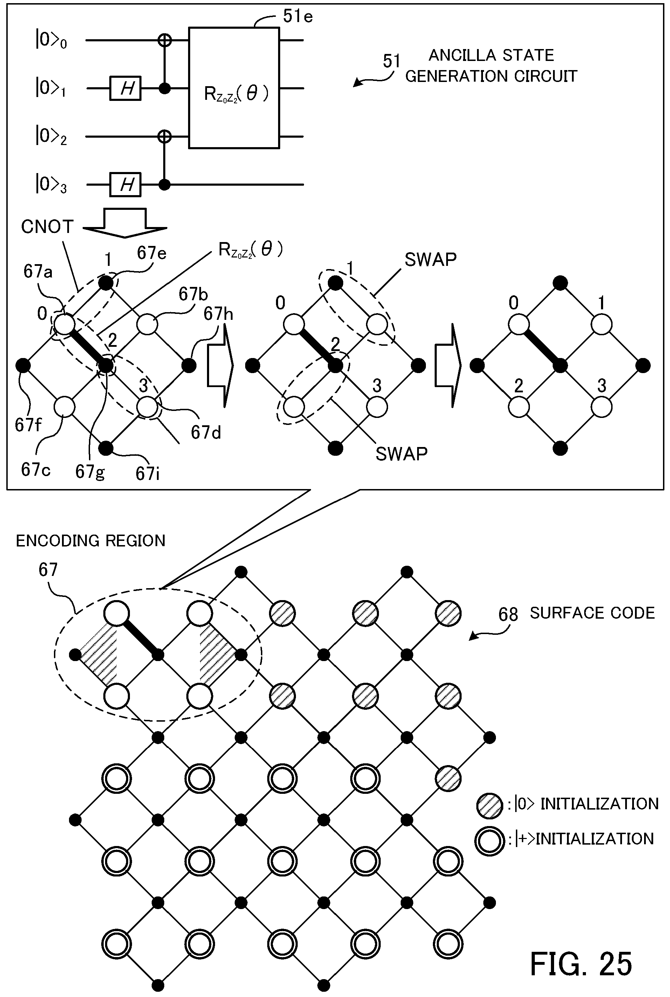

FIG. 25 illustrates an example of a circuit execution schedule and an initialization method. For example, it is assumed that the ancilla state generation circuit 51 is executed in an encoding region 67 and the generated ancilla state is expanded to the surface code 68 with designated code distance.

The ancilla state generation method determination unit 135 generates a gate operation procedure for executing the ancilla state generation circuit 51 using four data qubits 67a to 67d of the encoding region 67 and their neighboring ancilla qubits 67e to 67i. For example, the ancilla state generation method determination unit 135 assigns identification numbers "0 to 3" to the four qubits of the ancilla state generation circuit 51 in order from the top.

The ancilla state generation method determination unit 135 assigns the data qubit 67a to the qubit with the number "0". The ancilla state generation method determination unit 135 assigns the ancilla qubit 67e to the qubit with the number "1". The ancilla state generation method determination unit 135 assigns the ancilla qubit 67g to the qubit with the number "2". The ancilla state generation method determination unit 135 assigns the data qubit 67d to the qubit with the number "3". Then, the ancilla state generation method determination unit 135 first determines to execute the gate operation of an H gate on the ancilla qubit 67e and the data qubit 67d.

Next, the ancilla state generation method determination unit 135 determines to execute the gate operation of a CNOT gate on each of the qubit pair of the data qubit 67a and the ancilla qubit 67e and the qubit pair of the ancilla qubit 67g and the data qubit 67d. Further, the ancilla state generation method determination unit 135 determines to execute the gate operation of the two-qubit rotation gate 51e ($R_{Z0Z1}(\theta)$) on the qubit pair of the data qubit 67a and the ancilla qubit 67g.

Physical qubits representing the states of the qubits of the ancilla state generation circuit 51 need to be data qubits. Therefore, the ancilla state generation method determination unit 135 determines to execute the gate operation of a swap gate on each of the qubit pair of the data qubit 67b and the ancilla qubit 67e and the qubit pair of the data qubit 67c and the ancilla qubit 67g.

As a result, the state of the qubit with the number "0" after the execution of the ancilla state generation circuit 51 is represented by the data qubit 67a. The state of the qubit with the number "1" after the execution of the ancilla state generation circuit 51 is represented by the data qubit 67b. The state of the qubit with the number "2" after the execution of the ancilla state generation circuit 51 is represented by the data qubit 67c. The state of the qubit with the number "3" after the execution of the ancilla state generation circuit 51 is represented by the data qubit 67d. As a result, the ancilla state "$|m_{\theta}\rangle_L$" is represented by the four data qubits 67a to 67d.

The presence or absence of an error in the ancilla state "$|m_{\theta}\rangle_L$" may be detected by performing syndrome measurements on the four neighboring ancilla qubits 67e, 67f, 67h, and 67i. It is assumed that the initial state of each ancilla qubit 67e, 67f, 67h, and 67i is 10).

With respect to the ancilla qubit 67e, an H gate is applied to the ancilla qubit 67e, and two CNOT gates are executed with the ancilla qubit 67e as a control qubit and the data qubits 67a and 67b as target qubits. Thereafter, an H gate is applied to the ancilla qubit 67e again, and then the state of the ancilla qubit 67e is measured.

With respect to the ancilla qubit 67i, an H gate is applied to the ancilla qubit 67i, and two CNOT gates are executed with the ancilla qubit 67i as a control qubit and the data qubits 67c and 67d as target qubits. Thereafter, an H gate is applied to the ancilla qubit 67i again, and then the state of the ancilla qubit 67i is measured.

With respect to the ancilla qubit 67f, two CNOT gates are executed with the data qubits 67a and 67c as control qubits and the ancilla qubit 67f as a target qubit. Thereafter, the state of the ancilla qubit 67f is measured.

With respect to the ancilla qubit 67h, two CNOT gates are executed with the data qubits 67b and 67d as control qubits and the ancilla qubit 67h as a target qubit. Thereafter, the state of the ancilla qubit 67h is measured.

For example, in the case where the eigenvalues of the stabilizers obtained by the syndrome measurements of the ancilla qubits 67e, 67f, 67h, and 67i are all "1", it is determined that the ancilla state generated by the ancilla state generation circuit 51 passes the error detection. For example, if any one of the eigenvalues of the stabilizers obtained by the syndrome measurements of the ancilla qubits 67e, 67f, 67h, and 67i is "-1", it is determined that the generation of an ancilla state has failed.

In order to input a generated ancilla state to the gate teleportation circuit 50 (see FIG. 8), the surface code 68 expanded to the code distance for the gate teleportation circuit 50 needs to be initialized. To this end, the ancilla state generation method determination unit 135 determines an initialization method for each data qubit in the surface code 68 according to the position of the encoding region 67 in the surface code 68. In the example of FIG. 25, the ancilla state generation method determination unit 135 determines to initialize the hatched data qubits to |0⟩ (computational basis). Further, the ancilla state generation method determination unit 135 determines to initialize the data qubits represented by double circles to |+⟩ (Hadamard basis) .

The method of initializing the surface code 68 depends on the position of an encoding region used in the execution of the ancilla state generation circuit 51 that has generated an ancilla state to be used for an input to the gate teleportation circuit 50. The encoding region is the generation source of the ancilla state.

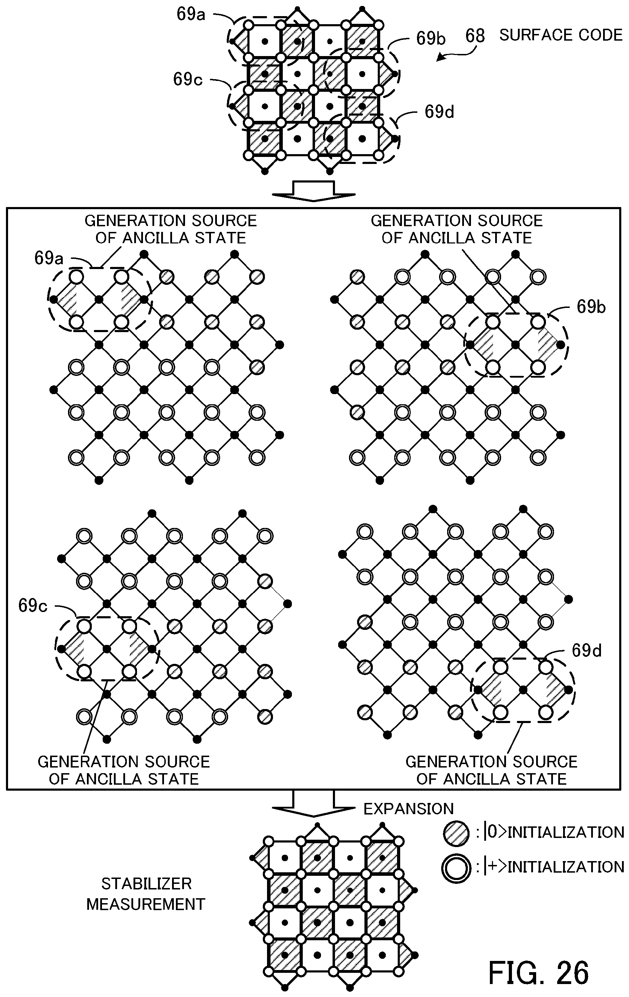

FIG. 26 illustrates an example of an initialization method according to the position of an encoding region. It is assumed that, as an optimal arrangement of the surface code 68, the ancilla state generation circuit 51 is determined to be executed in the encoding regions 69a to 69d. In this case, there are four patterns for initializing the surface code 68. The first pattern is a pattern in which the ancilla state generated in the encoding region 69a is used as an ancilla state in the surface code 68. The second pattern is a pattern in which the ancilla state generated in the encoding region 69b is used as an ancilla state in the surface code 68. The third pattern is a pattern in which the ancilla state generated in the encoding region 69c is used as an ancilla state in the surface code 68. The fourth pattern is a pattern in which the ancilla state generated in the encoding region 69d is used as an ancilla state in the surface code 68.

In each pattern, data qubits to be initialized to |0⟩ are indicated by hatched circles, and data qubits to be initialized to |+⟩ are indicated by double circles. The ancilla state generation method determination unit 135 generates all initialization patterns and stores the initialization patterns in the memory 102 or the storage device 103.

Which initialization pattern is used at the time of executing the gate operation of the phase rotation gate 43e depends on the results of executing the ancilla state generation circuit 51 in each of the encoding regions 69a to 69d. That is, what is used as an ancilla state in the surface code 68 is an ancilla state generated in an encoding region that has passed error detection as a result of parallel executions of the ancilla state generation circuit 51. When the ancilla states generated in a plurality of encoding regions have passed the error detection, the ancilla state generated in the encoding region with the lowest error rate for the qubit pair used in the gate operation of the two-qubit rotation gate 51e is used as the ancilla state of the surface code 68. The ancilla state expanded to the surface code 68 is subjected to error detection by means of stabilizer measurement.

When the quantum circuit execution control unit 140 executes the phase rotation gate 43e in the execution of the quantum circuit corresponding to a problem to be solved, the quantum circuit execution control unit 140 executes the gate operation of the phase rotation gate 43e using the initialization and arrangement information generated by the optimal arrangement determination unit 130.

FIG. 27 is a flowchart illustrating an example procedure for a quantum circuit execution process. Hereinafter, the process illustrated in FIG. 27 will be described in order of step numbers.

[Step S501] The quantum circuit execution control unit 140 obtains the quantum circuit 123 to be executed. The obtained quantum circuit 123 is made up of basic gates.

[Step S502] The quantum circuit execution control unit 140 selects a quantum gate to be executed next in order from the top of the quantum circuit 123.

[Step S503] The quantum circuit execution control unit 140 determines whether the selected quantum gate is the phase rotation gate 43e. If it is the phase rotation gate 43e, the quantum circuit execution control unit 140 advances the process to step S505. If it is not the phase rotation gate 43e, the quantum circuit execution control unit 140 advances the process to step S504.

[Step S504] The quantum circuit execution control unit 140 instructs the quantum computer 200 to perform a gate operation. In the case where the instruction to the quantum computer 200 is a measurement instruction, the quantum circuit execution control unit 140 receives a measurement result from the quantum computer 200. Thereafter, the quantum circuit execution control unit 140 advances the processing to step S506.

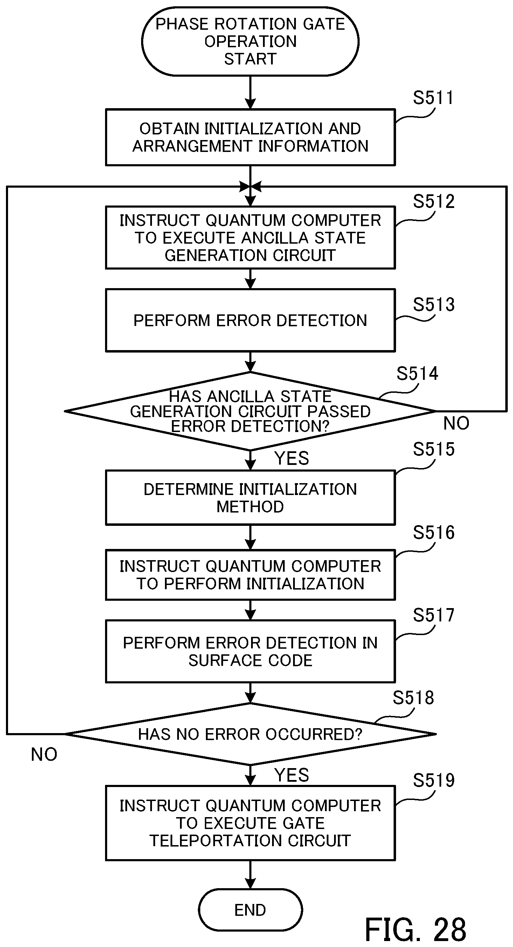

[Step S505] The quantum circuit execution control unit 140 performs a phase rotation gate operation process. Details of the phase rotation gate operation process will be described later (see FIG. 28).

(Step S506) The quantum circuit execution control unit 140 determines whether the execution of the quantum circuit is complete. When the execution is complete, the quantum circuit execution control unit 140 advances the process to step S507. If the execution is not complete, the quantum circuit execution control unit 140 advances the process to step S502.

[Step S507] The quantum circuit execution control unit 140 outputs the execution result of the quantum circuit 123. For example, the quantum circuit execution control unit 140 transmits the result of the quantum computation obtained by the execution of the quantum circuit 123 to the quantum computation request receiving unit 110.

Next, the phase rotation gate operation process will be described in detail.

FIG. 28 is a flowchart illustrating an example procedure for the phase rotation gate operation process. Hereinafter, the process illustrated in FIG. 28 will be described in order of step numbers.

[Step S511] The quantum circuit execution control unit 140 obtains initialization and arrangement information. The initialization and arrangement information includes optimal arrangement information, a circuit execution schedule, and an initialization method.

[Step S512] The quantum circuit execution control unit 140 instructs the quantum computer 200 to execute the ancilla state generation circuit 51 using resources available for a logical qubit indicating the states of the qubits on which the phase rotation gate 43e acts. At this time, the quantum circuit execution control unit 140 instructs the quantum computer 200 to generate an ancilla state using the physical qubits in the encoding region indicated by the optimal arrangement information. In the case where a plurality of ancilla state generation circuits 51 are executable in parallel with the resources available for the logical qubit, the quantum-circuit execution control unit 140 instructs the quantum computer 200 to execute the plurality of ancilla state generation circuits 51 in parallel.

[Step S513] The quantum circuit execution control unit 140 performs error detection of the executed ancilla state generation circuits 51. For example, the quantum circuit execution control unit 140 detects the presence or absence of an error in each ancilla state encoded by the [[4,1,1,2]] code 52 according to an error detection procedure corresponding to the [[4,1,1,2]] code 52. Then, the quantum circuit execution control unit 140 identifies ancilla state generation circuits 51 in which no error has occurred.

[Step S514] The quantum circuit execution control unit 140 determines whether any of the ancilla state generation circuits 51 has passed the error detection. If at least one of the ancilla state generation circuits 51 has passed the error detection, the quantum circuit execution control unit 140 advances the process to step S515. If errors are detected in all the ancilla state generation circuits 51, the quantum circuit execution control unit 140 advances the process to step S512 and regenerates ancilla states.

[Step S515] The quantum circuit execution control unit 140 determines an initialization method on the basis of the position of the encoding region used in the execution of an ancilla state generation circuit 51 that has passed the error detection. For example, the quantum circuit execution control unit 140 obtains the error rate of the qubit pair used in the execution of the two-qubit rotation gate 51e for each of the ancilla state generation circuits 51 that have passed the error detection. The quantum circuit execution control unit 140 then detects the position of the encoding region used in the execution of the ancilla state generation circuit 51 using the qubit pair with the lowest error rate. Then, the quantum circuit execution control unit 140 determines an initialization method corresponding to the detected position of the encoding region.

[Step S516] The quantum circuit execution control unit 140 instructs the quantum computer 200 to initialize the surface code according to the determined initialization method.

[Step S517] The quantum circuit execution control unit 140 performs error detection on the ancilla state represented by the expanded surface code. For example, the quantum circuit execution control unit 140 instructs the quantum computer 200 to perform stabilizer measurement of the surface code. Then, the quantum circuit execution control unit 140 determines whether an error has occurred, based on the result of the stabilizer measurement.

[Step S518] The quantum circuit execution control unit 140 determines whether an error has occurred in the ancilla state represented by the surface code. If no error has occurred, the quantum circuit execution control unit 140 advances the process to step S519. If an error has occurred, the quantum circuit execution control unit 140 advances the process to step S512.

[Step S519] The quantum circuit execution control unit 140 instructs the quantum computer 200 to execute the gate teleportation circuit 50 using the generated ancilla state.

In this way, the phase rotation gate 43e is executed. In the rotation by the gate teleportation circuit 50 using the ancilla state generated by the ancilla state generation circuit 51, a forward rotation and an inverse rotation occur stochastically (see FIG. 7). In the case where the inverse rotation is caused by the executed gate operation of the phase rotation gate 43e, the rotation angle is corrected and the gate operation of the phase rotation gate 43e is executed again.

Next, the effect of reducing the logical error rate by performing the arrangement optimization will be described.

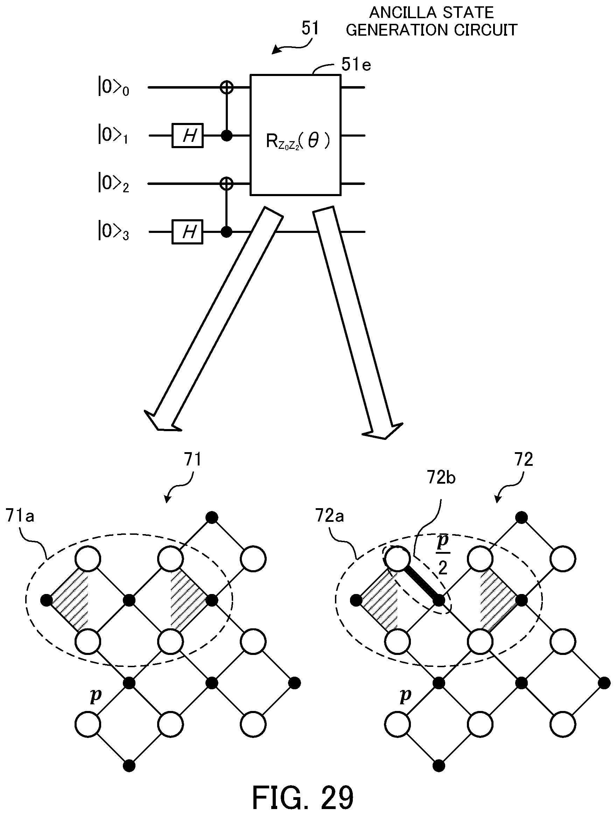

FIG. 29 illustrates an example of two surface codes having qubit pairs with different error rates. FIG. 29 illustrates two surface codes 71 and 72 with code distance "3" for executing the ancilla state generation circuit 51. All the qubit pairs included in the surface code 71 have an error rate of "p". One qubit pair 72b included in the surface code 72 has an error rate of "p/2". The other qubit pairs than the qubit pair 72b in the surface code 72 have an error rate of "p".

In the case where the ancilla state generation circuit 51 is executed using an encoding region 71a in the surface code 71, the error rate is "p" even if the two-qubit rotation gate 51e is executed using a qubit pair having the lowest error rate.

In the case of the surface code 72, it is determined through the arrangement optimization that an arrangement candidate including an encoding region 72a is the optimal arrangement. In the case where the ancilla state generation circuit 51 is executed using the encoding region 72a in the surface code 72, the two-qubit rotation gate 51e is executed using the qubit pair 72b having the error rate "p/2".

Next, the calculation results of the logical error rates of the surface code 71 and the surface code 72 by numerical simulation will be described.

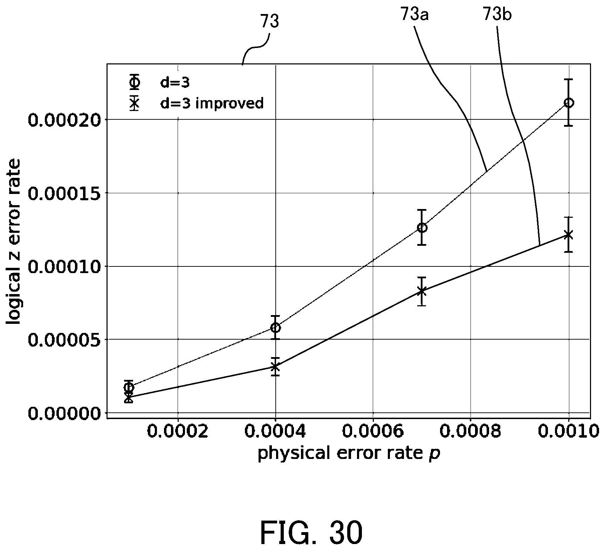

FIG. 30 illustrates examples of calculated logical error rates. The graph 73 illustrates the logical error rate of each of the surface codes 71 and 72 depending on the value of the error rate "p" (physical error rate). In the graph 73, the horizontal axis represents the physical error rate and the vertical axis represents the logical error rate. A line 73a indicates how the logical error rate of the surface code 71 changes with the value of the physical error rate "p". A line 73b indicates how the logical error rate of the surface code 72 changes with the value of the physical error rate "p".

Comparing the two lines 73a and 73b with each other, it is seen that when the error rate of the qubit pair used in the execution of the two-qubit rotation gate 51e is half "p/2", the logical error rate also decreases significantly. That is, the arrangement optimization, which is performed for executing the gate operation of the two-qubit rotation gate 51e using a qubit pair having a low error rate, results in reducing the occurrence of logical errors.

Although the embodiments have been illustrated, the configuration of each unit described in the embodiments may be replaced with another configuration having the same function. Any other components or steps may be added. Furthermore, any two or more configurations (features) of the above-described embodiments may be combined.

According to one aspect, it is achieved to reduce the occurrence of errors in a phase rotation gate.

**Claims**

1. A computer program that causes a computer to perform a process comprising:

determining, based on accuracy information (2) indicating error rates of a two-qubit gate operation executed on each qubit pair of a plurality of qubit pairs, each including interconnected qubits among a plurality of qubits in a qubit device included in a quantum computer, an order of priority for each qubit pair that is used in a gate operation of a two-qubit rotation gate (5a) in an ancilla state generation circuit (5), the ancilla state generation circuit being used for implementing a phase rotation gate (3);

generating a plurality of arrangement candidates (7a, 7b, ...) each indicating a candidate of positions of a plurality of qubit groups in the qubit device, the plurality of qubit groups being used in parallel execution of the ancilla state generation circuit (5);

selecting an arrangement candidate from the plurality of arrangement candidates (7a, 7b, ...), based on orders of priority determined for first qubit pairs that are to be used in the gate operation of the two-qubit rotation gate in execution of the ancilla state generation circuit (5) in the plurality of qubit groups at positions indicated by each of the plurality of arrangement candidates (7a, 7b, ...); and

determining to cause the quantum computer to execute the ancilla state generation circuit (5) in parallel using a first plurality of qubit groups at positions indicated by the selected arrangement candidate, in causing the quantum computer to execute a gate operation of the phase rotation gate,

wherein the phase rotation gate includes a gate teleportation circuit, and an ancilla state generated by the ancilla state generation circuit is input to the gate teleportation circuit.

2. The computer program according to claim 1, wherein the generating of the plurality of arrangement candidates (7a, 7b, ...) includes extracting the plurality of qubit groups (6) from a region (1a, 1b) with predetermined code distance and generating one or more arrangement candidates.

3. The computer program according to claim 1, wherein the selecting of the arrangement candidate includes

calculating an evaluation index value for each of the plurality of arrangement candidates (7a, 7b, ...), based on the accuracy information (2), the evaluation index value indicating a likelihood of failure in generation of the ancilla state, and

selecting the arrangement candidate, based on the evaluation index value calculated for each of the plurality of arrangement candidate (7a, 7b, ...).

4. The computer program according to claim 3, wherein the selecting of the arrangement candidate includes

detecting, for each of the plurality of arrangement candidates as a calculation-target arrangement candidate, a minimum error rate among qubit pairs included in each qubit group of the plurality of qubit groups included in the calculation-target arrangement candidate, and

calculating the evaluation index value based on minimum error rates detected respectively in the plurality of qubit groups in such a manner that the likelihood of failure indicated by the evaluation index value decreases as the minimum error rates decrease.

5. The computer program according to claim 4, wherein the selecting of the arrangement candidate includes calculating the evaluation index value for the calculation-target arrangement candidate using a formula including a weighted sum that involves multiplying each of the minimum error rates sorted in ascending order, detected respectively in the plurality of qubit groups included in the calculation-target arrangement candidate, by a weight that is greater than a weight used for a subsequent minimum error rate in the ascending order.

6. The computer program according to claim 1, wherein the process further includes determining, in executing the ancilla state generation circuit (6) in parallel, that a qubit pair having a minimum error rate in each of the first plurality of qubit groups is a first qubit pair on which the two-qubit rotation gate (5a) included in the ancilla state generation circuit (5) is caused to act.

7. The computer program according to claim 1, wherein the process further includes instructing, upon determining that a time to execute the phase rotation gate has come during execution of a quantum circuit by the quantum computer, the quantum computer to execute the ancilla state generation circuit (5) using the first plurality of qubit groups.

8. A quantum computation support method comprising:

determining, based on accuracy information (2) indicating error rates of a two-qubit gate operation executed on each qubit pair of a plurality of qubit pairs, each including interconnected qubits among a plurality of qubits in a qubit device included in a quantum computer, an order of priority for each qubit pair that is used in a gate operation of a two-qubit rotation gate (5a) in an ancilla state generation circuit (5), the ancilla state generation circuit being used for implementing a phase rotation gate (3);

generating a plurality of arrangement candidates (7a, 7b, ...) each indicating a candidate of positions of a plurality of qubit groups in the qubit device, the plurality of qubit groups being used in parallel execution of the ancilla state generation circuit (5);

selecting an arrangement candidate from the plurality of arrangement candidates (7a, 7b, ...), based on orders of priority determined for first qubit pairs that are to be used in the gate operation of the two-qubit rotation gate in execution of the ancilla state generation circuit (5) in the plurality of qubit groups at positions indicated by each of the plurality of arrangement candidates (7a, 7b, ...); and

determining to cause the quantum computer to execute the ancilla state generation circuit (5) in parallel using a first plurality of qubit groups at positions indicated by the selected arrangement candidate, in causing the quantum computer to execute a gate operation of the phase rotation gate,

wherein the phase rotation gate includes a gate teleportation circuit, and an ancilla state generated by the ancilla state generation circuit is input to the gate teleportation circuit.

9. An information processing apparatus comprising:

processing means for:

determining, based on accuracy information (2) indicating error rates of a two-qubit gate operation executed on each qubit pair of a plurality of qubit pairs, each including interconnected qubits among a plurality of qubits in a qubit device included in a quantum computer, an order of priority for each qubit pair that is used in a gate operation of a two-qubit rotation gate (5a) in an ancilla state generation circuit (5), the ancilla state generation circuit being used for implementing a phase rotation gate (3);

generating a plurality of arrangement candidates (7a, 7b, ...) each indicating a candidate of positions of a plurality of qubit groups in the qubit device, the plurality of qubit groups being used in parallel execution of the ancilla state generation circuit (5);

selecting an arrangement candidate from the plurality of arrangement candidates (7a, 7b, ...), based on orders of priority determined for first qubit pairs that are to be used in the gate operation of the two-qubit rotation gate in execution of the ancilla state generation circuit (5) in the plurality of qubit groups at positions indicated by each of the plurality of arrangement candidates (7a, 7b, ...); and

determining to cause the quantum computer to execute the ancilla state generation circuit (5) in parallel using a first plurality of qubit groups at positions indicated by the selected arrangement candidate, in causing the quantum computer to execute a gate operation of the phase rotation gate,

wherein the phase rotation gate includes a gate teleportation circuit, and an ancilla state generated by the ancilla state generation circuit is input to the gate teleportation circuit.

FIG. 1

QUANTUM COMPUTING SYSTEM

30

200

QUANTUM COMPUTER

100 CLASSICAL COMPUTER

20

NETWORK

31 TERMINAL

FIG. 2

FIG. 3

$|0\rangle:$ ⬆

$|1\rangle:$ ⬇  41

SUPERPOSITION
STATE

$\dfrac{1}{\sqrt{2}}$ ( ⬆ + ⬇ )

ERROR
OCCURS

$\dfrac{1}{\sqrt{2}}$ ( ⬆ + ⬇ )

INFORMATION
IS DESTORYED

$|0\rangle:$ ⬆

FIG. 4

PHYSICAL QUBITS

42a　　42b　　　　42n

42　LOGICAL QUBIT

42
42a　　42b　　　　42n

ERROR
OCCURS

42
42a　　42b　　　　42n

DETECT AND
CORRECT

FIG. 5

FIG. 6

PHASE ROTATION
GATE

43e

$$R_Z(\theta)$$

50 GATE TELEPORTATION CIRCUIT

GATE OPERATION
TARGET

$|\psi\rangle_L$

50a

50b

$M_Z$

ANCILLA STATE

$|m_\theta\rangle_L$

50c

$X_L$

$R_Z(\theta)|\psi\rangle_L$ or $R_Z(-\theta)|\psi\rangle_L$

$\boxed{M_Z} = \boxed{\nearrow}$

$|\psi\rangle_L$

$R_Z(\theta)$

$R_Z(\theta)|\psi\rangle_L$

$R_Z(-\theta)|\psi\rangle_L$

$R_Z(2\theta)$

$R_Z(\theta)|\psi\rangle_L$

$R_Z(-3\theta)|\psi\rangle_L$

...

AVERAGE NUMBER OF
OPERATIONS UNTIL SUCCESS

$$1 \times \frac{1}{2} + 2 \times \frac{1}{4} + \cdots = \sum_n n 2^{-n} = 2$$

FIG. 7

50 GATE TELEPORTATION CIRCUIT

GATE OPERATION
TARGET

$|\psi\rangle_L$

ANCILLA STATE

$|m_\theta\rangle_L$ ——— $R_Z(\theta)|\psi\rangle_L$ or $R_Z(-\theta)|\psi\rangle_L$

51 ANCILLA STATE GENERATION
CIRCUIT

51e

51c

$|0\rangle_0$

51a

$|0\rangle_1$  $H$

$R_{Z_0Z_2}(\theta)$   $|m_\theta\rangle_L$

$|0\rangle_2$

51b

$|0\rangle_3$  $H$

51d

52

[[4,1,1,2]] CODE

FIG. 8

52 [[4,1,1,2]] CODE

53 SURFACE CODE

53b X STABILIZER

53a Z STABILIZER

X X Z Z
X X Z Z

# FIG. 9

$|\psi\rangle_L$ —⊕— $M_Z$

$|m_\theta\rangle_L$ —●— $X_L$ — $R_Z(\theta)|\psi\rangle_L$ or $R_Z(-\theta)|\psi\rangle_L$

ANCILLA STATE
GENERATION CIRCUIT

51

51e

51c

$|0\rangle_0$

51a

$|0\rangle_1$   $H$

$R_{Z_0Z_2}(\theta)$

$|m_\theta\rangle_L$

$|0\rangle_2$

51b

$|0\rangle_3$   $H$

51d

ERROR REMAINING

FIG. 10

60a 60b 202 QUBIT DEVICE

RESOURCES AVAILABLE
FOR ONE LOGICAL QUBIT

ALL RESOURCES

60c 60d

FIG. 11

FIG. 12

START

RECEIVE QUANTUM
COMPUTATION REQUEST    S101

OPTIMAL ARRANGEMENT
DETERMINATION    S102

QUANTUM CIRCUIT
EXECUTION    S103

END

FIG. 13

FAILURE PROBABILITY CALCULATION UNIT — 132

ANCILLA STATE GENERATION FAILURE PROBABILITY

OPTIMAL ARRANGEMENT INFORMATION

GATE PRIORITY INFORMATION

QUBIT ARRANGEMENT INFORMATION

QUANTUM GATE ACCURACY INFORMATION

PRIORITY DETERMINATION UNIT — 131

ARRANGEMENT OPTIMIZATION UNIT — 134

ANCILLA STATE GENERATION METHOD DETERMINATION UNIT — 135

INITIALIZATION AND ARRANGEMENT INFORMATION (OPTIMAL ARRANGEMENT INFORMATION, CIRCUIT EXECUTION SCHEDULE, INITIALIZATION METHOD)

CODE INFORMATION

CANDIDATE ARRANGEMENT DETERMINATION UNIT — 133

ARRANGEMENT CANDIDATE LIST

FIG. 14

```
        ┌─────────────────────────┐
        │  OPTIMAL ARRANGEMENT    │
        │  DETERMINATION PROCESS  │
        │        START            │
        └─────────────────────────┘
                    │
                    ▼
   ┌──────────────────────────────────────┐  S111
   │           i = 1 TO M                  │
   │ (M : THE NUMBER OF LOGICAL QUBITS)    │
   └──────────────────────────────────────┘
                    │
                    ▼
   ┌──────────────────────────────────────┐  S112
   │   DETERMINE PRIORITY FOR TWO-QUBIT    │
   │              GATE                     │
   └──────────────────────────────────────┘
                    │
                    ▼
   ┌──────────────────────────────────────┐  S113
   │      CALCULATE ANCILLA STATE          │
   │   GENERATION FAILURE PROBABILITY      │
   └──────────────────────────────────────┘
                    │
                    ▼
   ┌──────────────────────────────────────┐  S114
   │     ARRANGEMENT CANDIDATE             │
   │        DETREMINATION                  │
   └──────────────────────────────────────┘
                    │
                    ▼
   ┌──────────────────────────────────────┐  S115
   │      ARRANGEMENT OPTIMIZATION         │
   └──────────────────────────────────────┘
                    │
                    ▼
   ┌──────────────────────────────────────┐  S116
   │  CIRCUIT EXECUTION SCHEDULE AND       │
   │     INITIALIZATION METHOD             │
   │        DETERMINATION                  │
   └──────────────────────────────────────┘
                    │
                    ▼
   ┌──────────────────────────────────────┐  S117
   │      STORE INITIALIZATION AND         │
   │     ARRANGEMENT INFORMATION           │
   └──────────────────────────────────────┘
                    │
                    ▼
   ┌──────────────────────────────────────┐  S118
   │           i = 1 TO M                  │
   │ (M : THE NUMBER OF LOGICAL QUBITS)    │
   └──────────────────────────────────────┘
                    │
                    ▼
              ┌──────────┐
              │   END    │
              └──────────┘
```

FIG. 15

FIG. 16

FIG. 17

ARRANGEMENT CANDIDATE
DETERMINATION PROCESS
START

OBTAIN CODE DISTANCE AND ANCILLA
STATE GENERATION FAILURE
PROBABILITY P — S201

DETECT ASSIGNABLE POSITION — S202

i = 1 TO N
(N : MAXIMUM PARALLELISM) — S203

IS DEGREE
OF PARALLELISM SUFFICIENT?
($P^i \ll 1$?) — S204    NO

YES

i = N? — S205    NO

YES

DETERMINE ARRANGEMENT CANDIDATE
FOR i ENCODING REGIONS — S206

STORE ARRANGEMENT CANDIDATE — S207

i = 1 TO N
(N : MAXIMUM PARALLELISM) — S208

END

FIG. 18

EXAMPLE OF CODE DISTANCE d = 5
AND 4 PARALLEL EXECUTIONS

FIG. 19

FIG. 20

52    [[4,1,1,2]] CODE
(BEFORE EXPANSION)

63   SURFACE CODE
(AFTER EXPANSION)

63a                    63b

63c

63e

63g

63d

63f

63h

GENERATE ARRANGEMENT
CANDIDATES

64a ARRANGEMENT
CANDIDATE

64b ARRANGEMENT
CANDIDATE

. . .

ARRANGEMENT
OPTIMIZATION
START

OBTAIN ARRANGEMENT CANDIDATE LIST
AND GATE PRIORITY INFORMATION — S301

SELECT PROVISIONAL CANDIDATE AND
CALCULATE EVALUATION INDEX VALUE $E_1$ — S302

SET EVALUATION INDEX MINIMUM VALUE
$E_{min}$ TO EVALUATION INDEX VALUE $E_1$
OF PROVISIONAL CANDIDATE — S303

i = 2 TO C
(C : THE NUMBER OF ARRANGEMENT
CANDIDATES) — S304

CALCULATE EVALUATION INDEX VALUE $E_i$ — S305

$E_i < E_{min}$? — S306   NO

YES

UPDATE PROVISIONAL CANDIDATE
(EVALUATION INDEX MINIMUM VALUE
$E_{min} \leftarrow E_i$) — S307

i = 2 TO C
(C : THE NUMBER OF ARRANGEMENT
CANDIDATES) — S308

DETERMINE THAT PROVISIONAL
CANDIDATE IS OPTIMAL ARRANGEMENT
AND STORE THIS DETERMINATION — S309

END

FIG. 21

66 SURFACE CODE        65 SURFACE CODE

QUBIT PAIRS WITH MINIMUM ERROR RATES $p_1, p_4, p_5, p_5$ ARE INCLUDED IN ENCODING REGIONS

QUBIT PAIRS WITH MINIMUM ERROR RATES $p_1, p_2, p_3, p_4$ ARE INCLUDED IN ENCODING REGIONS

EVALUATION INDEX VALUE: $E_B$        >        EVALUATION INDEX VALUE: $E_A$

$(p_1 < p_2 < p_3 < p_4 < p_5)$

FIG. 22

65    SURFACE CODE

CALCULATE
EVALUATION INDEX
VALUE

$$E(p_1, p_2, p_3, p_4) = p_1\big((1-P)^4 + 3(1-P)^3 P + 3(1-P)^2 P^2 + (1-P)P^3\big)$$
$$+p_2\big((1-P)^3 P + 2(1-P)^2 P^2 + (1-P)P^3\big) + p_3\big((1-P)^2 P^2 + (1-P)P^3\big)$$
$$+p_4 \ (1-P)P^3$$

# FIG. 23

CIRCUIT EXECUTION SCHEDULE AND
INITIALIZATION METHOD DETERMINATION
START

OBTAIN OPTIMAL ARRANGEMENT
INFORMATION — S401

i = 1 TO G
(G: THE NUMBER OF PARALLEL
EXECUTIONS) — S402

DOES
ANCILLA STATE GENERATION
CIRCUIT SATISFY
CONSTRAINT? — S403

NO

YES

SOLVE CONSTRAINT CONDITION — S404

DETERMINE CIRCUIT EXECUTION
SCHEDULE OF ANCILLA STATE
GENERATION CIRCUIT — S405

DETERMINE INITIALIZATION METHOD — S406

i = 1 TO G
(G: THE NUMBER OF PARALLEL
EXECUTIONS) — S407

STORE CIRCUIT EXECUTION SCHEDULE
AND INITIALIZATION METHOD — S408

END

FIG. 24

FIG. 25

FIG. 26

QUANTUM CIRCUIT
EXECUTION
START

OBTAIN QUANTUM CIRCUIT — S501

SELECT NEXT QUANTUM GATE — S502

PHASE ROTATION GATE? — S503

NO

INSTRUCT QUANTUM COMPUTER
TO PERFORM GATE OPERATION — S504

YES

S505 — PHASE ROTATION GATE
OPERATION

IS QUANTUM CIRCUIT COMPLETE? — S506

NO

YES

OUTPUT EXECUTION RESULT — S507

END

## FIG. 27

PHASE ROTATION GATE
OPERATION
START

OBTAIN INITIALIZATION AND
ARRANGEMENT INFORMATION — S511

INSTRUCT QUANTUM COMPUTER
TO EXECUTE ANCILLA STATE
GENERATION CIRCUIT — S512

PERFORM ERROR DETECTION — S513

HAS ANCILLA STATE
GENERATION CIRCUIT PASSED
ERROR DETECTION? — S514

NO

YES

DETERMINE INITIALIZATION
METHOD — S515

INSTRUCT QUANTUM COMPUTER
TO PERFORM INITIALIZATION — S516

PERFORM ERROR DETECTION IN
SURFACE CODE — S517

HAS NO ERROR OCCURRED? — S518

NO

YES

INSTRUCT QUANTUM COMPUTER
TO EXECUTE GATE
TELEPORTATION CIRCUIT — S519

END

FIG. 28

ANCILLA STATE
GENERATION CIRCUIT

FIG. 29

FIG. 30

Europäisches
Patentamt

European
Patent Office

Office européen
des brevets

## EUROPEAN SEARCH REPORT

**Application Number**

EP 25 17 4587

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | YUTARO AKAHOSHI ET AL:  "Partially Fault-tolerant Quantum Computing Architecture with Error-corrected Clifford Gates and Space-time Efficient Analog Rotations", ARXIV.ORG, CORNELL UNIVERSITY LIBRARY, 201 OLIN LIBRARY CORNELL UNIVERSITY ITHACA, NY 14853, 23 March 2023 (2023-03-23), XP091466791, | 1-4,6-9 | INV. G06N10/20 G06N10/70 |
| A | * page 7 - page 12 * | 5 | |

-----

**TECHNICAL FIELDS SEARCHED (IPC)**

G06N

The present search report has been drawn up for all claims

| Place of search | Date of completion of the search | Examiner |
|---|---|---|
| The Hague | 15 September 2025 | Falco, Gabriele |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUTARO AKAHOSHI** ; **KAZUNORI MARUYAMA** ; **HIROTAKA OSHIMA** ; **SHINTARO SATO** ; **KEISUKE FUJII**. Partially Fault-tolerant Quantum Computing Architecture with Error-corrected Clifford Gates and Space-time Efficient Analog Rotations. *arXiv:2303.13181v1*, 23 March 2023